# EUROPEAN PATENT APPLICATION

(11) **EP 4 808 068 A1**
(43) Date of publication of application: **16.09.2026**
(21) Application number: 24896203.7
(22) Date of filing: 05.11.2024
(51) Int. Cl.: H04L 43/0829

(54) **COMMUNICATION METHOD, COMMUNICATION APPARATUS AND COMMUNICATION SYSTEM**

(30) Priority: 29.11.2023 CN 202311633661
(71) Applicant: Huawei Technologies Co., Ltd., Shenzhen, Guangdong 518129 (CN)
(72) Inventor: PAN, Qi, Shenzhen, Guangdong 518129 (CN); NI, Hui, Shenzhen, Guangdong 518129 (CN)
(74) Representative: Thun, Clemens
(86) International application number: PCT/CN2024/129899
(87) International publication number: WO 2025/113112

(57) **Abstract**

This application provides a communication method, a communication apparatus, and a communication system. The method monitors QoS flows at the granularity of a PDU set, which includes a plurality of data packets, thereby improving monitoring efficiency. In addition, the method, exposes monitoring results via a second network element, enabling service control based on these results, improving accuracy of service control, and avoiding blind control.

## Description

### CROSS-REFERENCE TO RELATED APPLICATIONS

This application claims priority to Chinese Patent Application No. 202311633661.3, filed with the China National Intellectual Property Administration on November 29, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In existing quality of service (quality of service, QoS) mechanisms, service guarantees are at a data packet granularity, where data packets of the same service flow are mapped to the same QoS flow for transmission. Data packets of different service flows may be mapped to either the same QoS flow or different QoS flows. Different data packets within the same QoS flow are processed and transmitted on a packet-by-packet basis according to identical QoS parameters. In other words, all data packets within the same QoS flow receive equal and non-discriminatory treatment during transmission.

To obtain the transmission status of a QoS flow, the QoS flow can be monitored at the data packet granularity. However, to support real-time media services such as extended reality (extended reality, XR) and cloud gaming, a QoS transmission guarantee mechanism based on a data packet set granularity is introduced, where QoS guarantee and transmission at the granularity of the data packet set. How to monitor and report the QoS transmission status at the data packet set granularity needs to be resolved.

### SUMMARY

This application provides a communication method, a communication apparatus, and a communication system to improve efficiency of QoS flow monitoring.

According to a first aspect, an embodiment of this application provides a communication method. The method may be performed by a first network element or a chip used in a first network element. The method includes: receiving first information, where the first information is used to monitor a protocol data unit (protocol data unit, PDU) set of a QoS flow and report a monitoring result of the PDU set; monitoring, based on the first information, the PDU set carried in the QoS flow; and sending the monitoring result of the PDU set to a second network element.

In the foregoing solution, the QoS flow is monitored and reported at a granularity of the PDU set, and each PDU set includes a plurality of data packets, so that a transmission status at a granularity of a PDU set in the QoS flow can be monitored and reported. In comparison with monitoring the QoS flow at a granularity of a data packet, the method for monitoring the QoS flow at the granularity of the PDU set can improve monitoring efficiency by increasing a monitoring granularity, and is more applicable to a service scenario in which data coding is performed based on a PDU set, thereby improving service transmission efficiency. In addition, in this solution, the monitoring result may be further exposed to the outside via the second network element, so that a network element receiving the monitoring result can perceive the transmission status at the granularity of the PDU set in the QoS flow based on the monitoring result, and further control a service, for example, adjust a bit rate of the service or forward error correction (forward error correction, FEC) redundancy of the service based on the monitoring result. This helps improve accuracy of service control, and avoids blind control on the service.

In a possible implementation method, the first information includes a PDU set loss rate (PDU Set Loss Rate) event, and the PDU set loss rate event indicates that a monitored object is a PDU set loss rate; and the monitoring, based on the first information, the PDU set carried in the QoS flow includes: monitoring a PDU set loss rate of the QoS flow based on the first information.

In the foregoing solution, the first network element may measure the PDU set loss rate of the QoS flow, and may expose the PDU set loss rate to the outside via the second network element, so that an entity receiving the PDU set loss rate can control a service based on the PDU set loss rate. This helps improve accuracy of service control, and avoids blind control on the service. For example, an application server obtains the PDU set loss rate, and performs corresponding adjustment on a service side. For example, when the PDU set loss rate is high, it indicates that a current network is poor, and the application server may reduce a bit rate or increase an FEC redundancy ratio, to guarantee service experience while improving the network.

In a possible implementation method, the first network element is an access network device, and the PDU set loss rate includes one or more of the following:
a proportion of PDU sets that fail to be sent by the access network device to a terminal device, that is, a ratio of a quantity of PDU sets that are in the QoS flow and that fail to be sent to the terminal device to a total quantity of PDU sets sent by the access network device to the terminal device;
a proportion of PDU sets discarded due to data packet loss, that is, a ratio of a quantity of PDU sets that are in the QoS flow and that fail to be sent to a terminal device due to data packet loss to a total quantity of PDU sets sent by the access network device to the terminal device;
a proportion of PDU sets discarded due to transmission failure, that is, a ratio of a quantity of PDU sets that are in the QoS flow and that fail to be sent to a terminal device due to transmission failure to a total quantity of PDU sets sent by the access network device to the terminal device;
a proportion of data packets that fail to be transmitted, that is, a ratio of a quantity of data packets that are in the QoS flow and that fail to be transmitted to a terminal device to a total quantity of data packets sent by the access network device to the terminal device;
a total quantity of data packets that fail to be transmitted, that is, a quantity of data packets that are in the QoS flow and that fail to be transmitted to a terminal device; or
a proportion of PDU sets discarded due to packet loss based on PDU set importance, that is, a ratio of a quantity of PDU sets discarded due to different PDU set importance to a total quantity of PDU sets sent by the access network device to a terminal device.

In a possible implementation method, the first network element is a terminal device, and the PDU set loss rate includes one or more of the following:
a proportion of PDU sets that fail to be sent by the terminal device to an access network device, that is, a ratio of a quantity of PDU sets that are in the QoS flow and that fail to be sent to the access network device to a total quantity of PDU sets sent by the terminal device to the access network device;
a proportion of PDU sets discarded due to transmission failure, that is, a ratio of a quantity of PDU sets that are in the QoS flow and that fail to be sent to an access network device due to the data packet transmission failure to a total quantity of PDU sets sent by the terminal device to the access network device;
a proportion of data packets that fail to be transmitted, that is, a ratio of a quantity of data packets that are in the QoS flow and that fail to be transmitted to an access network device to a total quantity of data packets sent by the terminal device to the access network device;
a total quantity of data packets that fail to be transmitted, that is, a quantity of data packets that are in the QoS flow and that fail to be transmitted to an access network device; or
a proportion of PDU sets discarded due to packet loss based on PDU set importance, that is, a ratio of a quantity of PDU sets discarded due to different PDU set importance to a total quantity of PDU sets sent by the terminal device to an access network device.

In a possible implementation method, the monitoring result includes a PDU set loss rate corresponding to each PDU set importance.

In a possible implementation method, the first information includes a PDU set delay (PDU Set Delay) event, and the PDU set delay event indicates that a monitored object is a PDU set delay; and the monitoring, based on the first information, the PDU set carried in the QoS flow includes: monitoring a PDU set delay of the QoS flow based on the first information.

In the foregoing solution, the first network element may measure the PDU set delay of the QoS flow, and may expose the PDU set delay to the outside via the second network element, so that an entity receiving the PDU set delay can control a service based on the PDU set delay. This helps improve accuracy of service control, and avoids blind control on the service. For example, an application server obtains the PDU set delay, and performs corresponding adjustment on a service side. For example, when the PDU set delay is high, it indicates that a current network is poor, and the application server may reduce a bit rate or increase an FEC redundancy ratio, to guarantee service experience while improving the network.

In a possible implementation method, the first network element is an access network device, and the PDU set delay includes one or more of the following:
time used by the access network device to successfully transmit the PDU set to a terminal device;
time used by the access network device to successfully transmit the PDU set to a terminal device within a PDU set delay budget;
a proportion or a quantity of PDU sets that are successfully transmitted by the access network device to a terminal device within a PDU set delay budget;
a proportion or a quantity of PDU sets that are successfully transmitted by the access network device to a terminal device exceeding a PDU set delay budget; or
time used by the access network device to successfully transmit the PDU set to a terminal device exceeding a PDU set delay budget.

In a possible implementation method, the first network element is a terminal device, and the PDU set delay includes one or more of the following:
time used by the terminal device to successfully transmit the PDU set to an access network device;
time used by the terminal device to successfully transmit the PDU set to an access network device within a PDU set delay budget;
a proportion or a quantity of PDU sets that are successfully transmitted by the terminal device to an access network device within a PDU set delay budget;
a proportion or a quantity of PDU sets that are successfully transmitted by the terminal device to an access network device exceeding a PDU set delay budget; or
time used by the terminal device to successfully transmit the PDU set to an access network device exceeding a PDU set delay budget.

In a possible implementation method, the monitoring result includes the PDU set delay, or includes a sum of the PDU set delay and a core network packet delay budget (core network packet delay budget, CN PDB) for an N3 segment.

In a possible implementation method, the monitoring result includes a PDU set delay corresponding to each PDU set importance.

In a possible implementation method, the first network element is a user plane network element, the first information includes a PDU set spread delay (PDU Set Spread Delay) event, and the PDU set spread delay event indicates that a monitored object is a PDU set spread delay; and the monitoring, based on the first information, the PDU set carried in the QoS flow includes: monitoring a PDU set spread delay of the QoS flow based on the first information.

In the foregoing solution, the first network element may measure the PDU set spread delay of the QoS flow, and may expose the PDU set spread delay to the outside via the second network element, so that an entity receiving the PDU set spread delay can control a service based on the PDU set spread delay. This helps improve accuracy of service control, and avoids blind control on the service. For example, after an application server or a policy control network element obtains the PDU set spread delay, the application server adjusts a traffic characteristic of a PDU set of the service. For example, when the PDU set spread delay is high, it indicates that a current network is poor, the application server may reduce a bit rate or increase an FEC redundancy ratio, to guarantee service experience while improving the network, and the policy control network element may adjust a QoS parameter based on the PDU set spread delay.

In a possible implementation method, the PDU set spread delay includes one or more of the following:
a time interval between arrival of a 1^{st} packet in the PDU set at the user plane network element and arrival of a last packet in the PDU set at the user plane network element;
a time interval between arrival of a 1^{st} packet in the PDU set at the user plane network element and departure of a last packet in the PDU set from the user plane network element;
a time interval between departure of a 1^{st} packet in the PDU set from the user plane network element and departure of a last packet in the PDU set from the user plane network element; or
a proportion of target PDU sets, where a time interval between arrival of a 1^{st} packet in the target PDU set at the user plane network element and arrival of a last packet in the target PDU set at the user plane network element does not exceed a preset threshold.

In a possible implementation method, the monitoring result is a PDU set spread delay corresponding to each PDU set importance.

In a possible implementation method, the first network element is a session management network element, the first information includes a PDU set QoS handling enabled status event, and the PDU set QoS handling enabled status event indicates that a monitored object is a PDU set QoS handling enabled status; and the monitoring, based on the first information, the PDU set carried in the QoS flow includes: monitoring a PDU set QoS handling enabled status of the QoS flow based on the first information.

In the foregoing solution, the first network element may measure the PDU set QoS handling enabled status of the QoS flow, that is, determine whether PDU set QoS handling of the QoS flow is enabled, and may expose the PDU set QoS handling enabled status to the outside via the second network element, so that an entity receiving the PDU set QoS handling enabled status can perceive the PDU set QoS handling enabled status, thereby implementing accurate control on a service and avoiding blind control on the service. For example, a policy control network element obtains the PDU set QoS handling enabled status to perform different charging handling, or a third-party application learns of the PDU set QoS handling enabled status.

In a possible implementation method, the monitoring the PDU set QoS handling enabled status of the QoS flow includes: receiving a capability indication from an access network device, where the capability indication indicates that the access network device has a PDU set QoS handling capability; and monitoring the PDU set QoS handling enabled status of the QoS flow based on the capability indication.

In a possible implementation method, the monitoring the PDU set QoS handling enabled status of the QoS flow based on the capability indication includes: if sending a PDU set QoS parameter to the access network device based on the capability indication, determining that the PDU set QoS handling of the QoS flow is enabled.

In a possible implementation method, the monitoring the PDU set QoS handling enabled status of the QoS flow includes: sending a PDU set QoS parameter to an access network device; and if receiving a capability indication from the access network device, determining that the PDU set QoS handling of the QoS flow is enabled, where the capability indication indicates that the access network device has a PDU set QoS handling capability.

In a possible implementation method, the first information includes a reporting indication, and the reporting indication indicates to report the monitoring result of the PDU set to the second network element; and the sending the monitoring result of the PDU set to the second network element includes: sending the monitoring result to the second network element based on the reporting indication.

In the foregoing solution, the reporting indication is used to notify the first network element to send the monitoring result to the second network element, so that the first network element can accurately learn, based on the reporting indication, that the monitoring result needs to be reported to the second network element. This helps improve a reporting speed and reporting accuracy.

According to a second aspect, an embodiment of this application provides a communication method. The method may be performed by an application function network element or a chip used in an application function network element. The method includes: sending a subscription request, where the subscription request is used to subscribe to a monitoring result of a PDU set of a service flow; and receiving the monitoring result of the PDU set of the service flow.

In the foregoing solution, a QoS flow is monitored and reported at a granularity of a PDU set, and each PDU set includes a plurality of data packets, so that a transmission status at a granularity of a PDU set in the QoS flow can be monitored and reported. In comparison with monitoring the QoS flow at a granularity of a data packet, the method for monitoring the QoS flow at the granularity of the PDU set can improve monitoring efficiency by increasing a monitoring granularity, and is more applicable to a service scenario in which data coding is performed based on a PDU set, thereby improving service transmission efficiency. In addition, the application function network element may receive the monitoring result, to control a service based on the monitoring result, for example, adjust a bit rate of the service or FEC redundancy of the service based on the monitoring result. This helps improve accuracy of service control, and avoids blind control on the service.

In a possible implementation method, the subscription request includes a PDU set loss rate event, and the PDU set loss rate event indicates that a monitored object is a PDU set loss rate; and the receiving the monitoring result of the PDU set of the service flow includes: receiving a PDU set loss rate of the service flow.

In the foregoing solution, the monitoring result obtained by the application function network element includes the PDU set loss rate, so that the application function network element can control a service based on the PDU set loss rate. For example, when the PDU set loss rate is high, it indicates that a current network is poor, and an application server may reduce a bit rate or increase an FEC redundancy ratio, to guarantee service experience while improving the network. This helps improve accuracy of service control, and avoids blind control on the service.

In a possible implementation method, the PDU set loss rate is from an access network device, and the PDU set loss rate includes one or more of the following:
a proportion of PDU sets that fail to be sent by the access network device to a terminal device;
a proportion of PDU sets discarded due to data packet loss;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

In a possible implementation method, the PDU set loss rate is from a terminal device, and the PDU set loss rate includes one or more of the following:
a proportion of PDU sets that fail to be sent by the terminal device to an access network device;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

In a possible implementation method, the monitoring result includes a PDU set loss rate corresponding to each PDU set importance.

In a possible implementation method, the subscription request includes a PDU set delay event, and the PDU set delay event indicates that a monitored object is a PDU set delay; and the receiving the monitoring result of the PDU set of the service flow includes: receiving a PDU set delay of the service flow, or a sum of a PDU set delay and a core network packet delay budget CN PDB for an N3 segment.

In the foregoing solution, the monitoring result obtained by the application function network element includes the PDU set delay, or includes the sum of the PDU set delay and the CN PDB for the N3 segment, so that the application function network element can control a service based on the monitoring result. For example, when the PDU set delay is high, it indicates that a current network is poor, and an application server may reduce a bit rate or increase an FEC redundancy ratio, to guarantee service experience while improving the network. This helps improve accuracy of service control, and avoids blind control on the service.

In a possible implementation method, the monitoring result is from an access network device, and the PDU set delay includes one or more of the following:
time used by the access network device to successfully transmit the PDU set to a terminal device;
time used by the access network device to successfully transmit the PDU set to a terminal device within a PDU set delay budget; a proportion or a quantity of PDU sets that are successfully transmitted by the access network device to a terminal device within a PDU set delay budget;
a proportion or a quantity of PDU sets that are successfully transmitted by the access network device to a terminal device exceeding a PDU set delay budget; or
time used by the access network device to successfully transmit the PDU set to a terminal device exceeding a PDU set delay budget.

In a possible implementation method, the monitoring result is from a terminal device, and the PDU set delay includes one or more of the following:
time used by the terminal device to successfully transmit the PDU set to an access network device;
time used by the terminal device to successfully transmit the PDU set to an access network device within a PDU set delay budget;
a proportion or a quantity of PDU sets that are successfully transmitted by the terminal device to an access network device within a PDU set delay budget;
a proportion or a quantity of PDU sets that are successfully transmitted by the terminal device to an access network device exceeding a PDU set delay budget; or
time used by the terminal device to successfully transmit the PDU set to an access network device exceeding a PDU set delay budget.

In a possible implementation method, the subscription request includes a PDU set spread delay event, and the PDU set spread delay event indicates that a monitored object is a PDU set spread delay; and the receiving the monitoring result of the PDU set of the service flow includes: receiving a PDU set spread delay of the service flow.

In the foregoing solution, the monitoring result obtained by the application function network element includes the PDU set spread delay, so that the application function network element can control a service based on the PDU set spread delay. For example, when the PDU set spread delay is high, it indicates that a current network is poor, and an application server may reduce a bit rate or increase an FEC redundancy ratio, to guarantee service experience while improving the network. This helps improve accuracy of service control, and avoids blind control on the service.

In a possible implementation method, the monitoring result is from a user plane network element, and the PDU set spread delay includes one or more of the following:
a time interval between arrival of a 1^{st} packet in the PDU set at the user plane network element and arrival of a last packet in the PDU set at the user plane network element;
a time interval between arrival of a 1^{st} packet in the PDU set at the user plane network element and departure of a last packet in the PDU set from the user plane network element;
a time interval between departure of a 1^{st} packet in the PDU set from the user plane network element and departure of a last packet in the PDU set from the user plane network element; or
a proportion of target PDU sets, where a time interval between arrival of a 1^{st} packet in the target PDU set at the user plane network element and arrival of a last packet in the target PDU set at the user plane network element does not exceed a preset threshold.

In a possible implementation method, the subscription request includes a PDU set QoS handling enabled status event, and the PDU set QoS handling enabled status event indicates that a monitored object is a PDU set QoS handling enabled status; and the receiving the monitoring result of the PDU set of the service flow includes: receiving a PDU set QoS handling enabled status of the service flow.

In the foregoing solution, the monitoring result obtained by the application function network element includes the PDU set QoS handling enabled status, so that the application function network element can control a service based on the PDU set QoS handling enabled status. This helps improve accuracy of service control, and avoids blind control on the service.

In a possible implementation method, the subscription request includes a reporting indication, and the reporting indication indicates to report the monitoring result of the PDU set to a second network element; and the receiving the monitoring result of the PDU set of the service flow includes: receiving the monitoring result from the second network element.

According to a third aspect, an embodiment of this application provides a communication apparatus. The apparatus may be a first network element, or may be a chip used in a first network element. The apparatus has a function of implementing any implementation method of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be an application function network element, or may be a chip used in an application function network element. The apparatus has a function of implementing any implementation method of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or a means configured to perform steps of any implementation method of the first aspect and the second aspect.

According to a sixth aspect, an embodiment of this application provides a communication apparatus, including a processor and an interface circuit. The processor is configured to communicate with another apparatus through the interface circuit, and perform any implementation method of the first aspect and the second aspect. There are one or more processors.

According to a seventh aspect, an embodiment of this application provides a communication apparatus, including a processor. The processor is configured to invoke a program, to perform any implementation method of the first aspect and the second aspect. In addition, there may be one or more processors.

Optionally, the communication apparatus may further include a memory. The memory is coupled to the processor. The memory may be located inside the apparatus, or may be located outside the apparatus.

According to an eighth aspect, an embodiment of this application provides a communication apparatus, including a processor. When the apparatus runs, the processor executes computer instructions, to cause the apparatus to perform any implementation method of the first aspect and the second aspect.

Optionally, the communication apparatus may further include a memory, and the memory is configured to store the computer instructions.

According to a ninth aspect, an embodiment of this application further provides a computer program product. The computer program product includes a computer program or instructions. When the computer program or the instructions are run by a communication apparatus, any implementation method of the first aspect and the second aspect is performed.

According to a tenth aspect, an embodiment of this application further provides a computer-readable storage medium. The computer-readable storage medium stores instructions. When the instructions are run on a communication apparatus, any implementation method of the first aspect and the second aspect is performed.

According to an eleventh aspect, an embodiment of this application further provides a chip system, including a processor, configured to perform any implementation method of the first aspect and the second aspect.

According to a twelfth aspect, an embodiment of this application further provides a communication system, including: a first network element, configured to: receive first information, where the first information is used to monitor a PDU set carried in a QoS flow and report a monitoring result of the PDU set; monitor, based on the first information, the PDU set carried in the QoS flow; and send the monitoring result of the PDU set to a second network element; and the second network element, configured to receive the monitoring result.

According to a thirteenth aspect, an embodiment of this application further provides a communication system, including: an application function network element, configured to: send a subscription request to a policy control network element, where the subscription request is used to subscribe to a monitoring result of a PDU set of a service flow; and receive the monitoring result of the PDU set of the service flow from the policy control network element; and the policy control network element, configured to: receive the subscription request; and send the monitoring result to the application function network element.

### BRIEF DESCRIPTION OF DRAWINGS

FIG. 1a is a diagram of a 5G network architecture based on a service-based architecture;
FIG. 1b is a diagram of a 5G network architecture based on point-to-point interfaces;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a diagram of a communication apparatus according to an embodiment of this application; and
FIG. 12 is a diagram of a communication apparatus according to an embodiment of this application.

### DESCRIPTION OF EMBODIMENTS

To cope with a challenge of a wireless broadband technology and maintain a leading position of a 3rd generation partnership project (3rd generation partnership project, 3GPP) network, the 3GPP standard group formulates a next generation mobile communication network system (next generation system) architecture, which is referred to as a 5th generation (5th generation, 5G) network architecture. The architecture not only supports access to a 5G core network (core network, CN) by using a radio access technology (for example, a long term evolution (long term evolution, LTE) access technology or a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

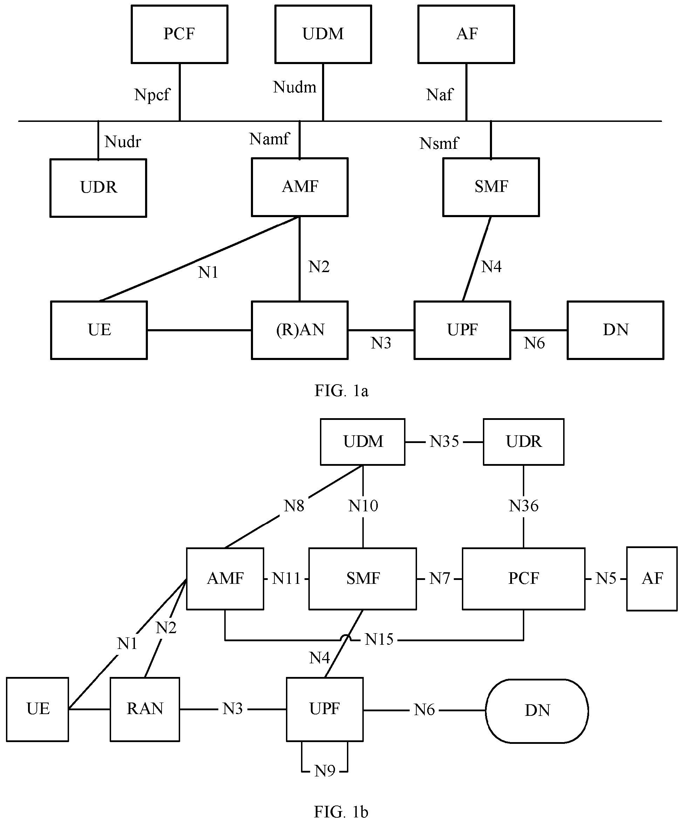

FIG. 1a is a diagram of a 5G network architecture based on a service-based architecture. The 5G network architecture shown in FIG. 1a may include an access network device and a core network device. A terminal device accesses a data network (data network, DN) via the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal device may be user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, smart office, smart wear, smart transportation, and a smart city. The terminal device may be a mobile phone, a tablet computer, a computer having a wireless transceiver function, a wearable device, a vehicle, an urban air transportation vehicle (for example, an uncrewed aerial vehicle or a helicopter), a ship, a robot, a mechanical arm, a smart home device, or the like. For ease of description, in this application, an example in which the UE is used as the terminal device is used for description, and UE that appears at any location subsequently may be replaced with the terminal device.

The access network device may be a radio access network device (RAN device) or a wired access network device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, and a base station or a module or a unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wired access network device includes but is not limited to: a wireline access gateway (wireline access gateway), a fixed-line phone network device, a switch, and a router. For ease of description, in this application, an example in which the base station is used as the access network device is used for description, and a base station that appears at any location subsequently may be replaced with the access network device.

The base station and the UE may be at fixed locations, or may be movable. The base station and the UE may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the UE are not limited in embodiments of this application.

The AMF network element includes functions such as mobility management and access authentication/authorization. In addition, the AMF network element is further responsible for transferring a user policy between the UE and the PCF.

The SMF network element includes functions such as session management, execution of a control policy delivered by the PCF network element, UPF network element selection, and allocation of an internet protocol (internet protocol, IP) address of the UE.

The UPF network element includes functions such as user plane data forwarding, session/flow-level charging statistics, and bandwidth limitation.

The UDM network element includes functions such as subscription data management and user access authorization.

The UDR includes functions of storage and retrieval of subscription data, policy data, application data, and other types of data.

The NEF network element is configured to support exposure of capabilities and events.

The AF network element transfers a requirement of an application side on a network side, for example, a quality of service (quality of service, QoS) requirement or user status event subscription. The AF may be a third-party functional entity, or may be an operator-deployed application service, for example, an IP multimedia subsystem (IP Multimedia Subsystem, IMS) voice call service. The AF network element includes an AF network element in a core network (that is, an AF network element of an operator) and a third-party AF network element (for example, an application server of an enterprise).

The PCF network element includes policy control functions such as being responsible for charging at a session or service flow level, QoS bandwidth guarantee and mobility management, and UE policy decision. The PCF network element includes an access and mobility management policy control (access and mobility management policy control function, AM PCF) network element and a session management policy control function (session management PCF, SM PCF) network element. The AM PCF network element is configured to formulate an AM policy and a user policy for the UE. The AM PCF network element may also be referred to as a policy control network element that provides a service for the UE (PCF for the UE). The SM PCF network element is configured to formulate a session management policy (session management policy, SM policy) for a session. The SM PCF network element may also be referred to as a policy control network element that provides a service for a protocol data unit (protocol data unit, PDU) session (PCF for a PDU session).

The NRF network element may be configured to: provide a network element discovery function, and provide, based on a request of another network element, network element information corresponding to a network element type. The NRF network element further provides network element management services, for example, network element registration, update, and deregistration, and network element status subscription and push.

The BSF network element may provide functions such as registration/deregistration/update of a BSF service, connection detection with the NRF network element, session binding information creation, UE information obtaining, and session binding information query for duplicate IP addresses.

The AUSF network element is responsible for authenticating a user, to determine whether the user or a device is allowed to access a network.

The DN is a network located outside an operator network. A plurality of DNs may access the operator network, and a plurality of services may be deployed on the DN, to provide services such as data and/or voice for the UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server to obtain instructions of the control server, transmit collected sensor data to the control server according to the instructions, and the like. For another example, the DN is an internal office network of a company, a mobile phone or a computer of an employee in the company may be the UE, and the mobile phone or the computer of the employee may access information, data resources, and the like on the internal office network of the company.

Npcf, Nudr, Nudm, Naf, Namf, and Nsmf in FIG. 1a are service-based interfaces respectively provided by the foregoing PCF, UDR, UDM, AF, AMF, and SMF, and are configured to invoke corresponding service-based operations. N1, N2, N3, N4, and N6 are interface sequence numbers. Meanings of these interface sequence numbers are as follows:
(1) N1 is an interface between the AMF network element and the UE, and may be configured to transfer non-access stratum (non-access stratum, NAS) signaling (for example, including a QoS rule from the AMF network element) to the UE, and the like.
(2) N2 is an interface between the AMF network element and the base station, and may be configured to transfer radio bearer control information from a core network side to the base station, and the like.
(3) N3 is an interface between the base station and the UPF network element, and is mainly configured to transfer uplink and downlink user plane data between the base station and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transfer uplink and downlink user data flows between the UPF network element and the DN.

FIG. 1b is a diagram of a 5G network architecture based on point-to-point interfaces. For descriptions of functions of network elements in the 5G network architecture, refer to descriptions of functions of corresponding network elements in FIG. 1a. Details are not described again. A main difference between FIG. 1b and FIG. 1a lies in the following: Interfaces between control plane network elements in FIG. 1a are service-based interfaces, and interfaces between control plane network elements in FIG. 1b are point-to-point interfaces.

In the architecture shown in FIG. 1b, names and functions of interfaces between the network elements are as follows:
(1) For meanings of N1, N2, N3, N4, and N6 interfaces, refer to the foregoing descriptions.
(2) N5 is an interface between the AF network element and the PCF network element, and may be configured to: deliver an application service request and report a network event.
(3) N7 is an interface between the PCF network element and the SMF network element, and may be configured to deliver a PDU session granularity control policy and a service data flow granularity control policy.
(4) N8 is an interface between the AMF network element and the UDM network element, and may be used by the AMF network element to obtain, from the UDM network element, subscription data and authentication data related to access and mobility management, used by the AMF to register, with the UDM, information related to UE mobility management, and the like.
(5) N9 is a user plane interface between UPF network elements, and is configured to transfer uplink and downlink user data flows between the UPF network elements.
(6) N10 is an interface between the SMF network element and the UDM network element, and may be used by the SMF network element to obtain session management-related subscription data from the UDM network element, used by the SMF network element to register UE session-related information with the UDM, and the like.
(7) N11 is an interface between the SMF network element and the AMF network element, and may be configured to: transfer PDU session tunnel information between the base station and the UPF network element, transfer a control message sent to the UE, transfer radio resource control information sent to the base station, and the like.
(8) N15 is an interface between the PCF network element and the AMF network element, and may be configured to deliver a UE policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network element or function may be a network element in a hardware device, or may be a software function running on dedicated hardware or a virtualized function instantiated on a platform (for example, a cloud platform). Optionally, the foregoing network element or function may be implemented by one device, may be jointly implemented by a plurality of devices, or may be one functional module in one device. This is not specifically limited in embodiments of this application.

A session management network element, a user plane network element, and an application function network element in this application may be the SMF network element, the UPF network element, and the AF network element in the architecture in FIG. 1a or FIG. 1b, or may be network elements that have functions of the SMF network element, the UPF network element, and the AF network element in a future communication system like a 6G communication system. This is not limited in this application. In embodiments of this application, an example in which the SMF network element, the UPF network element, and the AF network element are the session management network element, the user plane network element, and the application function network element is used for description, and the SMF network element, the UPF network element, and the AF network element are referred to as an SMF, a UPF, and an AF for short. In addition, in embodiments of this application, the PCF network element and the NEF network element are referred to as a PCF and a NEF for short.

In an existing QoS mechanism, services are guaranteed at a granularity of a data packet, data packets of a same service flow are mapped to a same QoS flow for transmission, and data packets of different service flows may be mapped to a same QoS flow, or may be mapped to different QoS flows. Policy handling and transmission are performed on different data packets of a same QoS flow one by one based on a same QoS parameter. In other words, all data packets in the same QoS flow are handled in an equal and undifferentiated manner during transmission.

In embodiments of this application, real-time media services, for example, currently emerging services such as augmented reality (augmented reality, AR), virtual reality (Virtual Reality, VR), mixed reality (mixed reality, MR), and cloud gaming, have strict requirements on end-to-end delays, and a data handling granularity corresponding to an upper-layer media service in encoding and transmission processes may no longer be a data packet granularity. For example, encoding may be performed at a media layer by using a media frame, a fragment, or the like as a basic granularity, that is, the media frame, the fragment, or the like as a basic unit may be independently encoded at an application layer. In addition, a receiving side performs decoding and displaying at the same granularity of the media frame, the fragment, or the like. In addition, one basic data unit like a media frame or a fragment usually includes a plurality of data packets (a size of each data packet is limited, for example, less than 1500 bytes). To represent the basic data unit at the media service layer, the basic data unit is referred to as a PDU set (PDU Set) or a data packet set in embodiments of this application. Therefore, one QoS flow carries one or more PDU sets, and each PDU set includes a plurality of data packets. The data packet may also be referred to as a PDU data packet, for example, may be specifically an IP data packet or an Ethernet data packet. The PDU set is a basic unit that can be independently handled by an upper-layer service layer. Once a data packet in the PDU set is lost or damaged, it may be difficult to correctly decode and display the entire PDU set.

Further, this application proposes a PDU set QoS handling (PDU Set QoS handling) mechanism. To be specific, loss rate and delay requirements at a granularity of a PDU set are provided as QoS parameters at a granularity of a PDU set. A 5G system identifies relationships between different data packets and the PDU set, to determine specific data packets included in a PDU set, and schedules, handles, and transmits all data packets in the PDU set as a whole based on the QoS parameters at the granularity of the PDU set, to guarantee user service experience.

PDU set QoS handling includes integrity transmission and differentiated transmission. The integrity transmission means that a network side guarantees transmission at a granularity of a PDU set during scheduling transmission. Once a PDU data packet is lost or damaged, the entire PDU set may be discarded. The differentiated transmission means determining relative importance between PDU sets by using a reference relationship introduced through encoding between media frames (or fragments), and discarding a PDU set with low importance based on the PDU set importance when network congestion occurs.

However, after the PDU set QoS handling mechanism is introduced, a handling status of the PDU set cannot be perceived and exposed to the outside. Consequently, an application layer incorrectly determines and estimates a network status. Details are as follows:

First, the PDU set QoS handling may cause an active packet loss caused by the integrity transmission or the differentiated transmission. Conventional closed-loop network estimation and control between a client at the application layer and an application server cannot guarantee that the application layer can perceive a most accurate transmission status.

Second, the PDU set QoS handling is requested by an application side to be performed by a core network, to guarantee the user service experience while improving a network capacity. Then, the application side cannot perceive whether the network side performs PDU set QoS handling and a specific execution status. Consequently, the application side cannot determine whether to perform corresponding QoS request adjustment at a granularity of a PDU set.

Third, when an N6 delay between the application side and a UPF cannot be guaranteed, a PDU set delay cannot be guaranteed either. However, the application side cannot perceive whether the N6 delay can be guaranteed.

To resolve the foregoing problems, embodiments of this application provide a monitoring and reporting method at a granularity of a PDU set, to avoid blind control of a service layer by monitoring and reporting a PDU set handling status in a network.

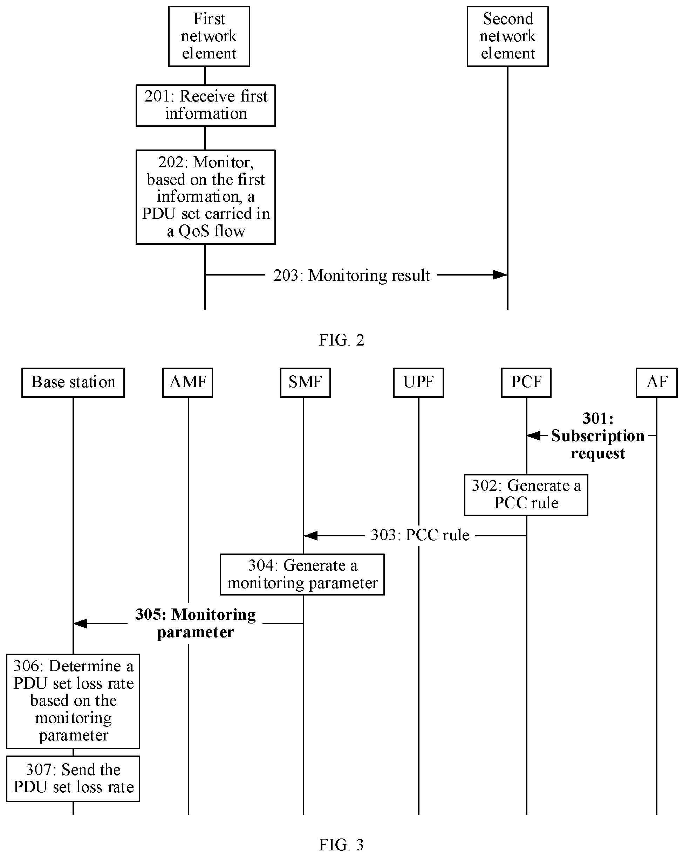

FIG. 2 is a schematic flowchart of a communication method according to an embodiment of this application. The method is performed by a first network element or a chip used in a first network element, and a second network element or a chip used in a second network element. The following uses an example in which the first network element and the second network element perform the method for description. The first network element may be UE, a base station, a UPF, or an SMF.

The method includes the following steps.

Step 201: The first network element receives first information, where the first information is used to monitor a PDU set carried in a QoS flow and report a monitoring result of the PDU set.

That the first information is used to monitor the PDU set carried in the QoS flow and report the monitoring result of the PDU set may be, for example, as follows: The first information is used to trigger to monitor the PDU set carried in the QoS flow and report the monitoring result of the PDU set, or is used to cause to monitor the PDU set carried in the QoS flow and report the monitoring result of the PDU set, or indicates to monitor the PDU set carried in the QoS flow and report the monitoring result of the PDU set.

For example, the first information includes a PDU set event, and the PDU set event indicates a monitored object, or the PDU set event may also be referred to as a monitored object or a monitored object corresponding to the PDU set. The monitored object may be a PDU set loss rate, a PDU set delay, a PDU set spread delay, or a PDU set QoS handling enabled status. For example, when the PDU set event is a PDU set loss rate event, it indicates that the PDU set loss rate is monitored. When the PDU set event is a PDU set delay event, it indicates that the PDU set delay is monitored. When the PDU set event is a PDU set spread delay event, it indicates that the PDU set spread delay is monitored. When the PDU set event is a PDU set QoS handling enabled status event, it indicates that the PDU set QoS handling enabled status is monitored.

For example, the first information includes identification information of the QoS flow, and the identification information may be a QoS flow identifier (QoS flow identity, QFI).

For example, the first information includes a reporting indication, and the reporting indication indicates to report the monitoring result of the PDU set to the second network element, or the reporting indication is used to trigger to report the monitoring result of the PDU set to the second network element, or the reporting indication is used to cause to report the monitoring result of the PDU set to the second network element.

For example, the first information further includes a monitoring window, and the monitoring window indicates a time length of monitoring, for example, specifically one hour or two hours, or the monitoring window indicates a time window for monitoring, for example, from 2 p.m. to 4 p.m. The monitoring window may be from the SMF, that is, generated by the SMF. Alternatively, in another implementation method, the monitoring window may be preconfigured on the first network element.

For example, the first information further includes a measurement frequency/reporting frequency, and the measurement frequency/reporting frequency indicates a frequency or a time interval for measuring/reporting the monitoring result of the PDU set.

It should be understood that monitoring the PDU set carried in the QoS flow and performing reporting are specifically monitoring and reporting a transmission status of the PDU set in the QoS flow. The transmission status of the PDU set may be the PDU set event. For example, the transmission status of the PDU set may be specifically the PDU set loss rate, the PDU set delay, the PDU set spread delay, or the PDU set QoS handling enabled status.

Step 202: The first network element monitors, based on the first information, the PDU set carried in the QoS flow.

Step 203: The first network element sends the monitoring result of the PDU set to the second network element. Correspondingly, the second network element receives the monitoring result of the PDU set.

For example, if the first information includes the reporting indication, step 203 may be as follows: The first network element sends the monitoring result of the PDU set to the second network element based on the reporting indication. If the first network element is the UE, the second network element may be a UPF or an SMF. Specifically, the UE may send the monitoring result of the PDU set to the UPF via an uplink data packet, or send the monitoring result of the PDU set to the SMF by using uplink signaling information. If the first network element is the base station, the second network element may be a UPF or an SMF. Specifically, the base station may send the monitoring result of the PDU set to the UPF via an uplink data packet (for example, a GTP-U header of the uplink data packet carries the monitoring result of the PDU set), or send the monitoring result of the PDU set to the SMF by using uplink signaling information. If the first network element is the UPF, the second network element may be an SMF or a NEF. To be specific, the UPF reports the monitoring result of the PDU set to the SMF, or the UPF exposes the monitoring result of the PDU set to the outside via the NEF. If the first network element is the SMF, the second network element may be a PCF or a NEF. To be specific, the SMF reports the monitoring result of the PDU set to the SMF, or the SMF exposes the monitoring result of the PDU set to the outside via the NEF.

For example, if the first information includes the measurement frequency/reporting frequency, the first network element measures/reports the monitoring result of the PDU set based on the measurement frequency/reporting frequency.

For example, if the first information does not include the reporting indication, step 203 may be as follows: The first network element may send the monitoring result of the PDU set to the second network element based on a local configuration.

In an implementation method, before step 201, an AF sends a subscription request to a PCF, where the subscription request includes service flow description information, a service flow corresponding to the service flow description information is carried in a QoS flow, and the subscription request is used to subscribe to a monitoring result of a PDU set of the service flow. Then, the PCF sends the foregoing first information to the first network element. Therefore, step 201 is specifically as follows: The first network element receives the first information from the PCF. Correspondingly, after step 203, the second network element further sends the monitoring result of the PDU set to the PCF, and then the PCF sends the monitoring result of the PDU set to the AF. After receiving the monitoring result of the PDU set, the AF may perform corresponding handling based on the monitoring result, for example, may adjust a bit rate or adjust forward error correction (forward error correction, FEC) redundancy. For example, when a PDU set loss rate is high or a PDU set delay is high, it indicates that a current network is poor, and an application server correspondingly reduces a bit rate or increases an FEC redundancy ratio, to guarantee service experience while improving the network.

In the foregoing solution, the QoS flow is monitored and reported at a granularity of the PDU set, so that the transmission status at the granularity of the PDU set in the QoS flow can be monitored and reported. In addition, in this solution, the monitoring result may be further exposed to the outside via the second network element, so that a network element receiving the monitoring result can perceive the transmission status at the granularity of the PDU set in the QoS flow based on the monitoring result, and further control a service. This helps improve accuracy of service control, and avoids blind control on the service.

"Expose to the outside (expose to the outside)" in embodiments of this application means that information (for example, a PDU set loss rate, a PDU set delay, a PDU set spread delay, or a PDU set QoS handling enabled status) is sent through a path (for example, a user plane path or a control plane path) to a network element that needs to use the information, for example, exposed to an application function network element (which may be, for example, an application server) or a higher layer of the UE. The meaning of "expose to the outside" is described herein, and details are not described below.

The following describes a plurality of specific implementation methods for monitoring the PDU set carried in the QoS flow in step 202.

Implementation method 1: Step 202 is specifically as follows: The first network element monitors a PDU set loss rate of the QoS flow based on the first information, where the first information includes the PDU set loss rate event, and the PDU set loss rate event indicates that the monitored object is the PDU set loss rate.

It may be understood as that the first information is used to monitor the PDU set loss rate of the QoS flow. Therefore, the first network element monitors the PDU set loss rate of the QoS flow based on the first information. That the first information is used to monitor the PDU set loss rate of the QoS flow may be, for example, as follows: The first information indicates to monitor the PDU set loss rate of the QoS flow, or the first information is used to trigger to monitor the PDU set loss rate of the QoS flow, or the first information is used to cause to monitor the PDU set loss rate of the QoS flow.

In an implementation method, if the first network element is the base station, the first information is used to monitor a PDU set loss rate in a downlink direction of the QoS flow, where the PDU set loss rate includes one or more of the following (1) to (6).

### (1) Proportion of PDU sets that fail to be sent by the base station to the UE

For example, the proportion of the PDU sets that fail to be sent by the base station to the UE is equal to a ratio of a quantity of PDU sets that are in the QoS flow and that fail to be sent by the base station to the UE to a quantity of PDU sets that need to be sent to the UE.

For example, the proportion of the PDU sets that fail to be sent by the base station to the UE is equal to a ratio of a quantity of PDU sets that are in the QoS flow and that fail to be sent by the base station to the UE in a monitoring window to a quantity of PDU sets that need to be sent to the UE.

### (2) Proportion of PDU sets discarded due to data packet loss

That the PDU set is discarded due to data packet loss means that when the base station receives a PDU set from the UPF, if at least one data packet in the received PDU set is lost, or when redundant coding is used in the PDU set for transmission, and the base station cannot restore an original data packet because a lost data packet exceeds a specific threshold, the base station discards the PDU set. In this case, the discarded PDU set is counted.

For example, the proportion of the PDU sets discarded due to data packet loss is equal to a ratio of a quantity of PDU sets that are in the QoS flow and that fail to be sent to the UE due to data packet loss to a total quantity of PDU sets sent by the base station to the UE.

For example, the proportion of the PDU sets discarded due to data packet loss is equal to a ratio of a quantity of PDU sets that are in the QoS flow and that fail to be sent to the UE due to data packet loss in a monitoring window to a total quantity of PDU sets sent by the base station to the UE.

### (3) Proportion of PDU sets discarded due to transmission failure

That the PDU set is discarded due to transmission failure means that the base station sends a PDU set to the UE, and the PDU set is discarded because at least one data packet in the PDU set fails to be transmitted, or when redundant coding is used in the PDU set for transmission, and the UE cannot restore an original data packet because a data packet that fails to be transmitted exceeds a specific threshold, the PDU set is discarded. In this case, the discarded PDU set is counted.

For example, the proportion of the PDU sets discarded due to transmission failure is equal to a ratio of a quantity of PDU sets that are in the QoS flow and that fail to be sent to the UE due to transmission failure to a total quantity of PDU sets sent by the base station to the UE.

For example, the proportion of the PDU sets discarded due to transmission failure is equal to a ratio of a quantity of PDU sets that are in the QoS flow and that fail to be sent to the UE due to transmission failure in a monitoring window to a total quantity of PDU sets sent by the base station to the UE.

### (4) Proportion of data packets that fail to be transmitted

For example, the proportion of the data packets that fail to be transmitted is equal to a ratio of a quantity of data packets that are in the QoS flow and that fail to be transmitted to the UE to a total quantity of data packets sent by the base station to the UE.

For example, the proportion of the data packets that fail to be transmitted is equal to a ratio of a quantity of data packets that are in the QoS flow and that fail to be transmitted to the UE in a monitoring window to a total quantity of data packets sent by the base station to the UE.

### (5) Total quantity of data packets that fail to be transmitted

For example, the total quantity of the data packets that fail to be transmitted is equal to a quantity of data packets that are in the QoS flow and that fail to be transmitted to the UE.

For example, the total quantity of the data packets that fail to be transmitted is equal to a quantity of data packets that are in the QoS flow and that fail to be transmitted to the UE in a monitoring window.

### (6) Proportion of PDU sets discarded due to packet loss based on PDU set importance

For example, during network congestion, when the base station sends a PDU set to the UE, to reduce network load or improve a success rate of sending the PDU set, the base station may discard a PDU set with relatively low importance. In this case, the discarded PDU set is counted.

For example, the proportion of the PDU sets discarded due to packet loss based on the PDU set importance is equal to a ratio of a quantity of PDU sets discarded due to different PDU set importance to a total quantity of PDU sets sent by the base station to the UE.

For example, the proportion of the PDU sets discarded due to packet loss based on the PDU set importance is equal to a ratio of a quantity of PDU sets discarded due to different PDU set importance in a monitoring window to a total quantity of PDU sets sent by the base station to the UE.

It should be noted that the PDU set loss rate may be one or more of the foregoing (1) to (6) calculated for each PDU set importance, or may be one or more of the foregoing (1) to (6) calculated for all PDU set importance.

In another implementation method, if the first network element is the UE, the first information is used to monitor a PDU set loss rate in an uplink direction of the QoS flow, where the PDU set loss rate includes one or more of the following (1) to (5).

### (1) Proportion of PDU sets that fail to be sent by the UE to the base station

For example, the proportion of the PDU sets that fail to be sent by the UE to the base station is equal to a ratio of a quantity of PDU sets that are in the QoS flow and that fail to be sent by the UE to the base station to a quantity of PDU sets that need to be sent to the base station.

For example, the proportion of the PDU sets that fail to be sent by the UE to the base station is equal to a ratio of a quantity of PDU sets that are in the QoS flow and that fail to be sent by the UE to the base station in a monitoring window to a quantity of PDU sets that need to be sent to the base station.

### (2) Proportion of PDU sets discarded due to transmission failure

That the PDU set is discarded due to transmission failure means that the UE sends a PDU set to the base station, and the PDU set is discarded because at least one data packet in the PDU set fails to be transmitted, or when redundant coding is used in the PDU set for transmission, and the base station cannot restore an original data packet because a data packet that fails to be transmitted exceeds a specific threshold, the PDU set is discarded. In this case, the discarded PDU set is counted.

For example, the proportion of the PDU sets discarded due to transmission failure is equal to a ratio of a quantity of PDU sets that are in the QoS flow and that fail to be sent to the base station due to transmission failure to a total quantity of PDU sets sent by the UE to the base station.

For example, the proportion of the PDU sets discarded due to transmission failure is equal to a ratio of a quantity of PDU sets that are in the QoS flow and that fail to be sent to the base station due to transmission failure in a monitoring window to a total quantity of PDU sets sent by the UE to the base station.

### (3) Proportion of data packets that fail to be transmitted

For example, the proportion of the data packets that fail to be transmitted is equal to a ratio of a quantity of data packets that are in the QoS flow and that fail to be transmitted to the base station to a total quantity of data packets sent by the UE to the base station.

For example, the proportion of the data packets that fail to be transmitted is equal to a ratio of a quantity of data packets that are in the QoS flow and that fail to be transmitted to the base station in a monitoring window to a total quantity of data packets sent by the UE to the base station.

### (4) Total quantity of data packets that fail to be transmitted

For example, the total quantity of the data packets that fail to be transmitted is equal to a quantity of data packets that are in the QoS flow and that fail to be transmitted to the base station.

For example, the total quantity of the data packets that fail to be transmitted is equal to a quantity of data packets that are in the QoS flow and that fail to be transmitted to the base station in a monitoring window.

### (5) Proportion of PDU sets discarded due to packet loss based on PDU set importance

For example, during network congestion, when the UE sends a PDU set to the base station, to reduce network load or improve a success rate of sending the PDU set, the UE may discard a PDU set with relatively low importance. In this case, the discarded PDU set is counted.

For example, the proportion of the PDU sets discarded due to packet loss based on the PDU set importance is equal to a ratio of a quantity of PDU sets discarded due to different PDU set importance to a total quantity of PDU sets sent by the UE to the base station.

For example, the proportion of the PDU sets discarded due to packet loss based on the PDU set importance is equal to a ratio of a quantity of PDU sets discarded due to different PDU set importance in a monitoring window to a total quantity of PDU sets sent by the UE to the base station.

It should be noted that the PDU set loss rate may be one or more of the foregoing (1) to (5) calculated for each PDU set importance, or may be one or more of the foregoing (1) to (5) calculated for all PDU set importance.

According to Implementation method 1, the monitoring result reported in step 203 includes the PDU set loss rate.

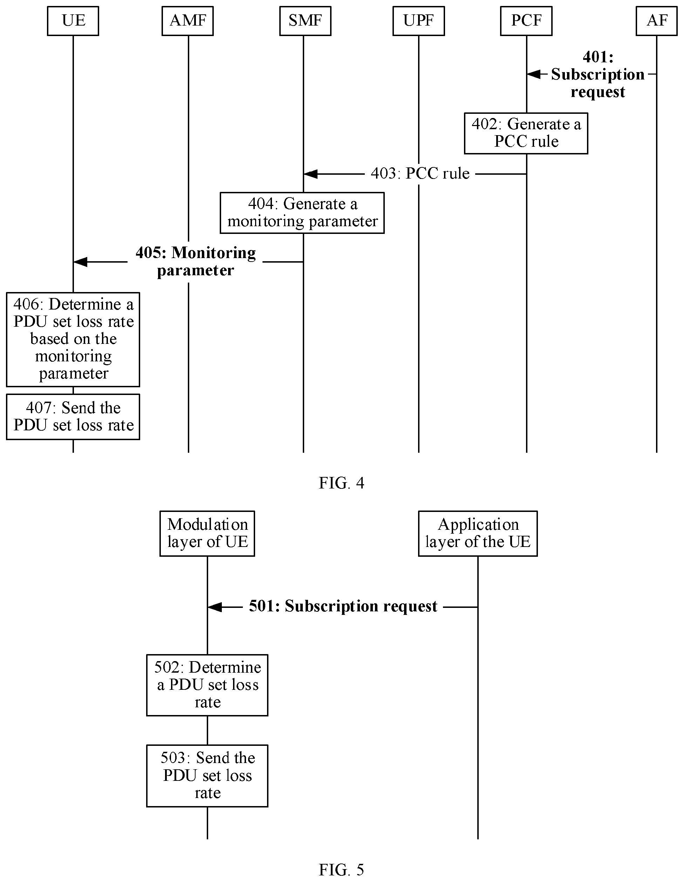

For a specific example of Implementation method 1, refer to the following embodiments in FIG. 3 and FIG. 4.

Implementation method 2: Step 202 is specifically as follows: The first network element monitors a PDU set delay of the QoS flow based on the first information, where the first information includes the PDU set delay event, and the PDU set delay event indicates that the monitored object is the PDU set delay.

It may be understood as that the first information is used to monitor the PDU set delay of the QoS flow. Therefore, the first network element monitors the PDU set delay of the QoS flow based on the first information. That the first information is used to monitor the PDU set delay of the QoS flow may be, for example, as follows: The first information indicates to monitor the PDU set delay of the QoS flow, or the first information is used to trigger to monitor the PDU set delay of the QoS flow, or the first information is used to cause to monitor the PDU set delay of the QoS flow.

In an implementation method, if the first network element is the base station, the first information is used to monitor a PDU set delay in a downlink direction of the QoS flow, where the PDU set delay includes one or more of the following (1) to (3).

### (1) Time used by the base station to successfully transmit the PDU set to the UE

For example, the time used by the base station to successfully transmit the PDU set to the UE specifically includes: time used by the base station to successfully transmit PDU sets to the UE, which may be an average value, a largest value, a smallest value, or a median of time used for transmitting both of at least two PDU sets to the UE, or may be an average value, a largest value, a smallest value, or a median of time used by the base station to successfully transmit at least two PDU sets to the UE in a monitoring window; or includes time used for successfully transmitting each PDU set to the UE.

It should be noted that the time used by the base station to successfully transmit the PDU set to the UE may be time used from receiving a 1^{st} data packet in the PDU set by the base station to successfully transmitting a last data packet in the PDU set to the UE, or time used from receiving a 1^{st} data packet in the PDU set by the base station to successfully transmitting all data packets in the PDU set to the UE.

### (2) Time used by the base station to successfully transmit the PDU set to the UE within a PDU set delay budget

For example, the time used by the base station to successfully transmit the PDU set to the UE within the PDU set delay budget specifically includes: an average value, a largest value, a smallest value, or a median of time used by the base station to successfully transmit at least two PDU sets to the UE, or includes time used for successfully transmitting each PDU set to the UE. The time used for successfully transmitting each PDU set to the UE is less than or equal to the PDU set delay budget. For example, if the PDU set delay budget is equal to 10 milliseconds (ms), the base station collects statistics on an average value, a smallest value, a largest value, or a median of time used for successfully transmitting at least two PDU sets to the UE within 10 ms, or collects statistics on time used for successfully transmitting a PDU set to the UE within 10 ms. The time used by the base station to successfully transmit the PDU set to the UE within the PDU set delay budget may be an average value, a largest value, a smallest value, or a median of time used by the base station to successfully transmit at least two PDU sets to the UE within a period of time (that is, within a monitoring window), or may include time used for successfully transmitting each PDU set to the UE, and the time used for successfully transmitting each PDU set to the UE herein is less than or equal to the PDU set delay budget.

### (3) Time used by the base station to successfully transmit the PDU set to the UE exceeding a PDU set delay budget

For example, the time used by the base station to successfully transmit the PDU set to the UE exceeding the PDU set delay budget may be an average value, a largest value, a smallest value, or a median of time used by the base station to successfully transmit at least two PDU sets to the UE, or time used for successfully transmitting each PDU set to the UE. The time used for successfully transmitting each PDU set to the UE herein is greater than the PDU set delay budget. For example, if the PDU set delay budget is equal to 10 ms, the base station collects statistics on an average value, a largest value, a smallest value, or a median of time used for successfully transmitting at least two PDU sets to the UE exceeding 10 ms, or collects statistics on time used for successfully transmitting a PDU set to the UE exceeding 10 ms. Optionally, the time used by the base station to successfully transmit the PDU set to the UE exceeding the PDU set delay budget may be an average value, a largest value, a smallest value, or a median of time used by the base station to successfully transmit at least two PDU sets to the UE within a period of time (that is, within a monitoring window), or may include time used for successfully transmitting each PDU set to the UE, and the time used for successfully transmitting each PDU set to the UE herein is greater than the PDU set delay budget.

For example, the PDU set delay further includes a proportion or a quantity of PDU sets that are successfully transmitted by the base station to the UE within the PDU set delay budget.

For example, the PDU set delay further includes a proportion or a quantity of PDU sets that are successfully transmitted by the base station to the UE exceeding the PDU set delay budget.

It should be noted that the PDU set delay may be one or more of the foregoing (1) to (3) calculated for each PDU set importance, or may be one or more of the foregoing (1) to (3) calculated for all PDU set importance.

In another implementation method, if the first network element is the UE, the first information is used to monitor a PDU set delay in an uplink direction of the QoS flow, where the PDU set delay includes one or more of the following (1) to (3).

### (1) Time used by the UE to successfully transmit the PDU set to the base station

For example, the time used by the UE to successfully transmit the PDU set to the base station specifically includes: time used by the UE to successfully transmit PDU sets to the base station, which may be an average value, a largest value, a smallest value, or a median of time used for transmitting both of at least two PDU sets to the UE, or may be an average value, a largest value, a smallest value, or a median of time used by the UE to successfully transmit at least two PDU sets to the base station in a monitoring window; or includes time used for successfully transmitting each PDU set to the base station.

It should be noted that the time used by the UE to successfully transmit the PDU set to the base station may be time used from receiving a 1^{st} data packet in the PDU set by a lower layer (for example, a modulation layer) of the UE from an upper layer (for example, an application layer) of the UE to successfully transmitting a last data packet in the PDU set to the base station, or time used from receiving a 1^{st} data packet in the PDU set by a lower layer (for example, a modulation layer) of the UE from an upper layer (for example, an application layer) of the UE to successfully transmitting all data packets in the PDU set to the base station.

### (2) Time used by the UE to successfully transmit the PDU set to the base station within a PDU set delay budget

For example, the time used by the UE to successfully transmit the PDU set to the base station within the PDU set delay budget specifically includes: an average value, a largest value, a smallest value, or a median of time used by the UE to successfully transmit at least two PDU sets to the base station, or includes time used for successfully transmitting each PDU set to the base station. In addition, the time used for successfully transmitting each PDU set to the UE herein is less than or equal to the PDU set delay budget. For example, if the PDU set delay budget is equal to 10 ms, the UE collects statistics on an average value, a smallest value, a largest value, or a median of time used for successfully transmitting at least two PDU sets to the base station within 10 ms, or collects statistics on time used for successfully transmitting a PDU set to the base station within 10 ms. Specifically, the time used by the UE to successfully transmit the PDU set to the base station within the PDU set delay budget may be an average value, a largest value, a smallest value, or a median of time used by the UE to successfully transmit at least two PDU sets to the base station within a period of time (that is, within a monitoring window), or may include time used for successfully transmitting each PDU set to the base station, and the time used for successfully transmitting each PDU set to the base station herein is less than or equal to the PDU set delay budget.

### (3) Time used by the UE to successfully transmit the PDU set to the base station exceeding a PDU set delay budget

For example, the time used by the UE to successfully transmit the PDU set to the base station exceeding the PDU set delay budget specifically includes: an average value, a largest value, or a smallest value of time used by the UE to successfully transmit at least two PDU sets to the base station, or includes time used for successfully transmitting each PDU set to the base station. In addition, the time used for successfully transmitting each PDU set to the base station herein is greater than the PDU set delay budget. For example, if the PDU set delay budget is equal to 10 ms, the UE collects statistics on an average value, a smallest value, or a largest value of time used for successfully transmitting at least two PDU sets to the base station exceeding 10 ms, or collects statistics on time used for successfully transmitting a PDU set to the base station exceeding 10 ms. Optionally, the time used by the UE to successfully transmit the PDU set to the base station exceeding the PDU set delay budget may be an average value, a largest value, a smallest value, or a median of time used by the UE to successfully transmit at least two PDU sets to the base station within a period of time (that is, within a monitoring window), or may include time used for successfully transmitting each PDU set to the base station, and the time used for successfully transmitting each PDU set to the base station herein is greater than the PDU set delay budget.

For example, the PDU set delay further includes a proportion or a quantity of PDU sets that are successfully transmitted by the UE to the base station within the PDU set delay budget.

For example, the PDU set delay further includes a proportion or a quantity of PDU sets that are successfully transmitted by the UE to the base station exceeding the PDU set delay budget.

It should be noted that the PDU set delay may be one or more of the foregoing (1) to (3) calculated for each PDU set importance, or may be one or more of the foregoing (1) to (3) calculated for all PDU set importance.

According to Implementation method 2, the monitoring result reported in step 203 includes the PDU set delay, or includes a sum of the PDU set delay and a CN PDB for an N3 segment, that is, additionally includes a delay for the N3 segment. The CN PDB for the N3 segment is a delay needed for data packet or PDU set transmission between the base station and the UPF. If the delay for the N3 segment is the CN PDB for the N3 segment, the delay for the N3 segment may be considered as a static delay. Alternatively, an existing N3 delay measurement mechanism may be reused to obtain a dynamic delay for the N3 segment.

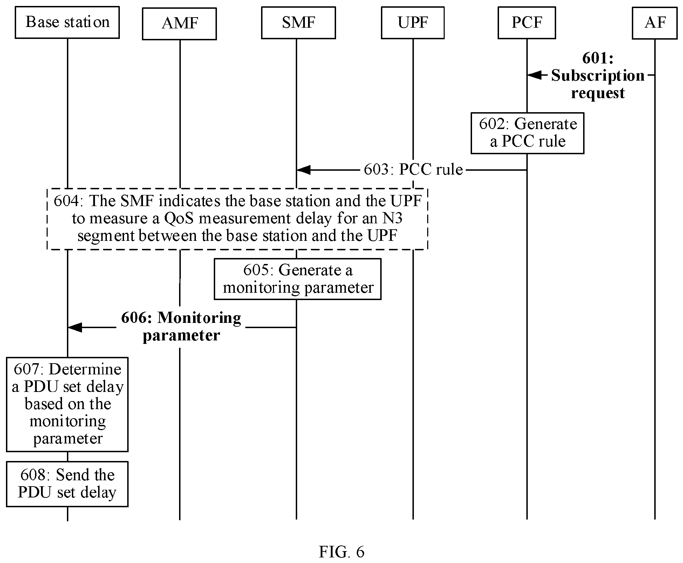

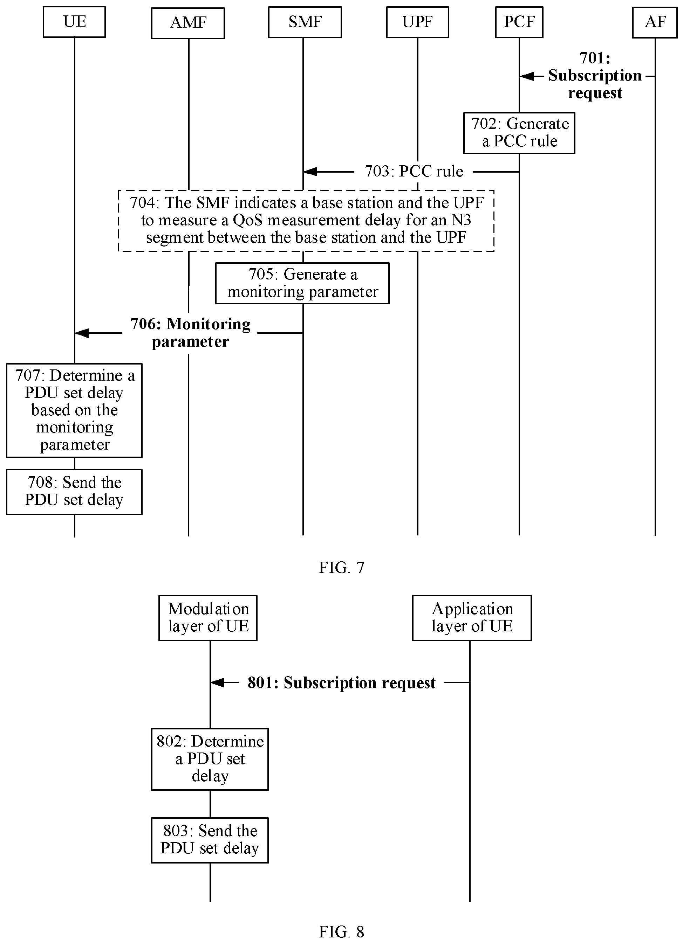

For a specific example of Implementation method 2, refer to the following embodiments in FIG. 6 and FIG. 7.

Implementation method 3: Step 202 is specifically as follows: The first network element monitors a PDU set spread delay of the QoS flow based on the first information, where the first information includes the PDU set spread delay event, and the PDU set spread delay event indicates that the monitored object is the PDU set spread delay. The first network element is the UPF.

It may be understood as that the first information is used to monitor the PDU set spread delay of the QoS flow. Therefore, the first network element monitors the PDU set spread delay of the QoS flow based on the first information. That the first information is used to monitor the PDU set spread delay of the QoS flow may be, for example, as follows: The first information indicates to monitor the PDU set spread delay of the QoS flow, or the first information is used to trigger to monitor the PDU set spread delay of the QoS flow, or the first information is used to cause to monitor the PDU set spread delay of the QoS flow.

In an implementation method, the PDU set spread delay includes one or more of the following (1) to (4).

### (1) Time interval between arrival of a 1^{st} packet in the PDU set at the UPF and arrival of a last packet in the PDU set at the UPF

In other words, the time interval is, for a downlink direction, a time interval between receiving a 1^{st} packet in a PDU set and receiving a last packet in the PDU set by the UPF. The time interval reflects a delay status of an N6 link. For example, if time at which a 1^{st} packet in a PDU set arrives at the UPF is T1, and time at which a last packet in the PDU set arrives at the UPF is T2, the PDU set spread delay may include T2-T1.

### (2) Time interval between arrival of a 1^{st} packet in the PDU set at the user plane network element and departure of a last packet in the PDU set from the user plane network element

In other words, the time interval is, for a downlink direction, a time interval between receiving a 1^{st} packet in a PDU set by the UPF and departure of a last packet in the PDU set from the UPF after the last packet arrives at the UPF. The time interval reflects a delay status of an N6 link. For example, if time at which a 1^{st} packet in a PDU set arrives at the UPF is T1, and a last packet in the PDU set is sent from the UPF (for example, sent to the base station) at time T2 after the last packet arrives at the UPF, the PDU set spread delay may include T2-T1.

### (3) Time interval between departure of a 1^{st} packet in the PDU set from the user plane network element and departure of a last packet in the PDU set from the user plane network element

In other words, the time interval is, for a downlink direction, a time interval between departure of the 1^{st} packet in the PDU set from the UPF after the 1^{st} packet arrives at the UPF and departure of the last packet in the PDU set from the UPF after the last packet arrives at the UPF. The time interval reflects a delay status of an N6 link. For example, if a 1^{st} packet in a PDU set is sent from the UPF (for example, sent to the base station) at time T1 after the 1^{st} packet arrives at the UPF, and a last packet in the PDU set is sent from the UPF (for example, sent to the base station) at time T2 after the last packet arrives at the UPF, the PDU set spread delay may include T2-T1.

(4) Proportion of target PDU sets, where a time interval between arrival of a 1^{st} packet in the target PDU set at the UPF and arrival of a last packet in the target PDU set at the UPF does not exceed a preset threshold, and the threshold is from the AF, the PCF, or the SMF, or is locally configured by the UPF.

In other words, if a time interval between receiving a 1^{st} packet in a PDU set and receiving a last packet in the PDU set by the UPF is less than or equal to the preset threshold, the PDU set is referred to as a target PDU set, and the UPF collects statistics on a proportion of target PDU sets in all PDU sets.

In another implementation method, alternatively, it may be defined as follows: A time interval between arrival of a 1^{st} packet in the target PDU set at the UPF and arrival of a last packet in the target PDU set at the UPF is greater than a preset threshold. In other words, if a time interval between receiving a 1^{st} packet in a PDU set and receiving a last packet in the PDU set by the UPF is greater than the preset threshold, the PDU set is referred to as a target PDU set, and the UPF collects statistics on a proportion of target PDU sets in all PDU sets.

Alternatively, it may be defined as follows: A time interval between arrival of a 1^{st} packet in the target PDU set at the UPF and departure of a last packet in the target PDU set from the UPF does not exceed a preset threshold. Alternatively, it may be defined as follows: A time interval between arrival of a 1^{st} packet in the target PDU set at the UPF and departure of a last packet in the target PDU set from the UPF is greater than a preset threshold. Alternatively, it may be defined as follows: A time interval between departure of a 1^{st} packet in the target PDU set from the user plane network element and departure of a last packet in the target PDU set from the user plane network element does not exceed a preset threshold. Alternatively, it may be defined as follows: A time interval between departure of a 1^{st} packet in the target PDU set from the user plane network element and departure of a last packet in the target PDU set from the user plane network element is greater than a preset threshold.

It should be noted that the PDU set spread delay may be one or more of the foregoing (1) to (4) calculated for each PDU set importance, or may be one or more of the foregoing (1) to (4) calculated for all PDU set importance.

According to Implementation method 3, the monitoring result reported in step 203 includes the PDU set spread delay.

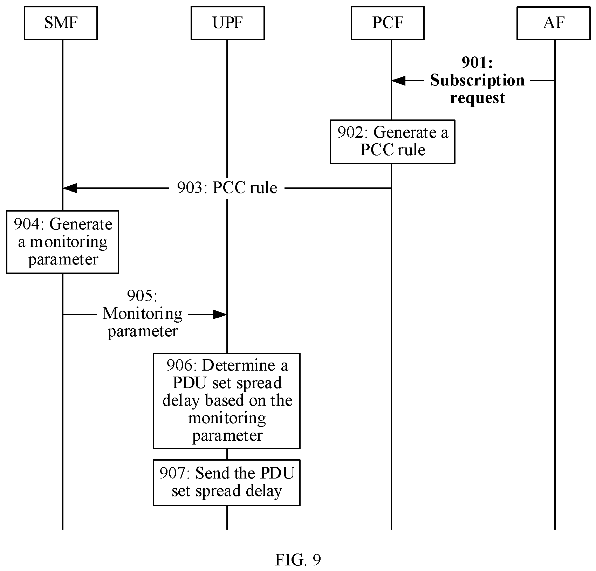

For a specific example of Implementation method 3, refer to the following embodiment in FIG. 9.

Implementation method 4: Step 202 is specifically as follows: The first network element monitors a PDU set QoS handling enabled status of the QoS flow based on the first information, where the first information includes the PDU set QoS handling enabled status event, and the PDU set QoS handling enabled status event indicates that the monitored object is the PDU set QoS handling enabled status. The first network element is the SMF.

It may be understood as that the first information is used to monitor the PDU set QoS handling enabled status of the QoS flow. Therefore, the first network element monitors the PDU set QoS handling enabled status of the QoS flow based on the first information. That the first information is used to monitor the PDU set QoS handling enabled status of the QoS flow may be, for example, as follows: The first information indicates to monitor the PDU set QoS handling enabled status of the QoS flow, or the first information is used to trigger to monitor the PDU set QoS handling enabled status of the QoS flow, or the first information is used to cause to monitor the PDU set QoS handling enabled status of the QoS flow.

In an implementation method, the SMF receives a capability indication from the base station, where the capability indication indicates that the base station has a PDU set QoS handling capability, and then the SMF determines the PDU set QoS handling enabled status of the QoS flow based on the capability indication. For example, the SMF sends a PDU set QoS parameter to the base station based on the capability indication. After sending the PDU set QoS parameter, the SMF determines that PDU set QoS handling of the QoS flow is enabled, that is, the PDU set QoS handling enabled status of the QoS flow is enabled.

In another implementation method, the SMF sends a PDU set QoS parameter to the base station. Then, if the SMF receives a capability indication from the base station, where the capability indication indicates that the base station has a PDU set QoS handling capability, the SMF determines that PDU set QoS handling of the QoS flow is enabled, that is, the PDU set QoS handling enabled status of the QoS flow is enabled.

In another implementation method, the SMF sends a PDU set QoS parameter to the base station. Then, if the SMF receives indication information from the base station, where the indication information indicates that the base station has received the PDU set QoS parameter, the SMF considers that the base station has a PDU set QoS handling capability, and determines that PDU set QoS handling of the QoS flow is enabled, that is, the PDU set QoS handling enabled status of the QoS flow is enabled.

According to Implementation method 4, the monitoring result reported in step 203 includes the PDU set QoS handling enabled status.

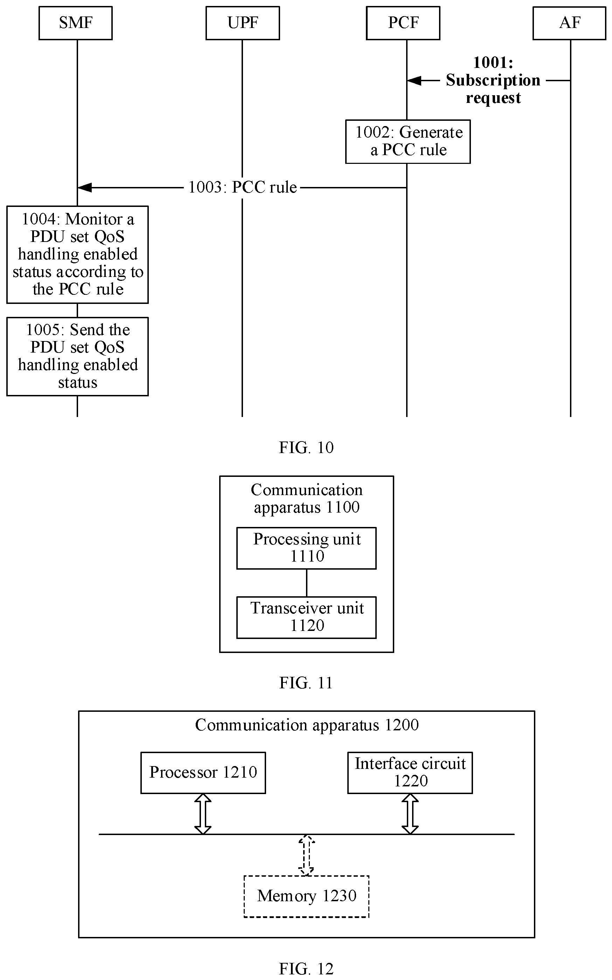

For a specific example of Implementation method 4, refer to the following embodiment in FIG. 10.

The following describes the embodiment in FIG. 2 with reference to specific embodiments in FIG. 3 to FIG. 10.

FIG. 3 is a schematic flowchart of a communication method according to an embodiment of this application. This embodiment is described for monitoring and exposing a PDU set loss rate to the outside for a downlink direction. For example, a base station monitors the PDU set loss rate, and exposes a monitoring result to the outside via a user plane or a control plane. The embodiment in FIG. 3 is a specific example according to Implementation method 1 in the embodiment in FIG. 2, and the base station is a specific example of the first network element in the embodiment in FIG. 2.

The method includes the following steps.

Step 301: An AF sends a subscription request to a PCF. Correspondingly, the PCF receives the subscription request.

The subscription request includes service flow description information, a PDU set loss rate event (PDU Set Loss Rate Event), and a monitoring trigger condition and/or a reporting trigger condition. The subscription request is used to request to subscribe to the PDU set loss rate from the PCF.

The service flow description information indicates a to-be-monitored service flow, and the service flow description information may be an IP 3-tuple, an IP 5-tuple, or the like of the service flow.

The monitoring trigger condition indicates a condition for triggering monitoring of the PDU set loss rate. For example, the monitoring trigger condition indicates periodically triggered monitoring, or indicates event-triggered monitoring. When the monitoring trigger condition indicates the periodically triggered monitoring, the monitoring trigger condition may include a monitoring periodicity, or the periodicity is preconfigured or predetermined in a protocol. The event-triggered monitoring may occur, for example, when a quantity of lost PDU sets is greater than a preset threshold, or a quantity of lost PDU data packets is greater than a preset threshold, or a network congestion degree exceeds a preset threshold.

The reporting trigger condition indicates a condition for triggering reporting of the PDU set loss rate. For example, the reporting trigger condition indicates periodically triggered reporting, or indicates event-triggered reporting. When the reporting trigger condition indicates the periodically triggered reporting, the reporting trigger condition may include a reporting periodicity, or the periodicity is preconfigured or predetermined in a protocol. The event-triggered monitoring may occur, for example, when a quantity of lost PDU sets is greater than a preset threshold, or a quantity of lost PDU data packets is greater than a preset threshold, or a network congestion degree exceeds a preset threshold, or the PDU set loss rate is greater than a preset threshold.

It should be noted that the monitoring trigger condition may be the same as or different from the reporting trigger condition. When the monitoring trigger condition is the same as the reporting trigger condition, the monitoring trigger condition and the reporting trigger condition may be collectively referred to as a trigger condition.

Optionally, the subscription request further includes a monitoring window, and the monitoring window indicates a time length of monitoring, for example, specifically one hour or two hours.

Optionally, the subscription request further includes a reporting indication, and the reporting indication indicates to send the monitoring result to a UPF. It may be understood as that the reporting indication indicates to expose the monitoring result to the outside via the user plane. Alternatively, the reporting indication indicates to send the monitoring result to an SMF. It may be understood as that the reporting indication indicates to expose the monitoring result to the outside via the control plane.

In an implementation method, the AF may be a third-party application server, or an application server in a 5G core network. If the AF is in a trusted domain, the AF may directly interact with the PCF, that is, send the subscription request to the PCF by invoking a service interface of the PCF, for example, an Npcf_PolicyAuthorization service interface or an Npcf_EventExposure service interface. If the AF is in an untrusted domain, the AF needs to interact with the PCF via a NEF. The AF invokes a service interface of the NEF, for example, an Nnef_AFSessionWithQoS service interface or an Nnef_EventExposure service interface, to send the subscription request to the PCF. Then, the NEF correspondingly invokes a service interface of the PCF to send the subscription request to the PCF, so that the PCF receives the subscription request.

For a definition of the PDU set loss rate, refer to the descriptions in Implementation method 1 in the embodiment in FIG. 2. Details are not described again.

Step 302: The PCF generates a PCC rule.

For example, the PCF generates the PCC rule based on the subscription request and/or a local policy. The PCC rule includes the service flow description information, the PDU set loss rate event, and the monitoring trigger condition and/or the reporting trigger condition. Optionally, the PCC rule further includes at least one of the monitoring window or the reporting indication.

Step 303: The PCF sends the PCC rule to the SMF. Correspondingly, the SMF receives the PCC rule.

In an implementation method, if UE initiates a PDU session establishment or modification procedure, the SMF actively initiates a session management policy association establishment or modification procedure, and obtains the PCC rule from the PCF.

In another implementation method, if the PCF initiates a session management policy association modification procedure, the PCF actively sends the PCC rule to the SMF.

Step 304: The SMF generates a monitoring parameter.

For example, the SMF generates the monitoring parameter according to the PCC rule and/or a local policy.

The monitoring parameter includes a QFI, the PDU set loss rate event, and the monitoring trigger condition and/or the reporting trigger condition. Optionally, the monitoring parameter further includes at least one of the monitoring window or the reporting indication.

The QFI indicates a QoS flow corresponding to the service flow description information.

Step 305: The SMF sends the monitoring parameter to the base station. Correspondingly, the base station receives the monitoring parameter.

After step 305, a remaining PDU session establishment or modification procedure is completed. For details, refer to clause 4.3.2.1 of TS 23.502.

That the SMF sends the monitoring parameter to the base station may be specifically that the SMF sends the monitoring parameter to the base station via an AMF.

Step 306: The base station determines the PDU set loss rate based on the monitoring parameter.

For example, the base station monitors a PDU set loss rate of a downlink PDU set based on the PDU set loss rate event and the monitoring trigger condition in the monitoring parameter.

Step 307: The base station sends the PDU set loss rate.

In an implementation method, if the reporting indication indicates (or is used to trigger or cause) to send the monitoring result to the UPF, step 307 is specifically as follows: The base station adds the PDU set loss rate to a general packet radio service (general packet radio service, GPRS) tunnelling protocol user plane (GPRS tunnelling protocol user plane, GTP-U) layer of an uplink data packet, and reports the uplink data packet to the UPF. Then, the UPF sends the PDU set loss rate to the AF, or the UPF sends the PDU set loss rate to the AF via the NEF.

In another implementation method, if the reporting indication indicates (or is used to trigger or cause) to send the monitoring result to the SMF, step 307 is specifically as follows: The base station sends the PDU set loss rate to the SMF. Then, the SMF sends the PDU set loss rate to the PCF. The PCF sends the PDU set loss rate to the AF, or the PCF sends the PDU set loss rate to the AF via the NEF.

Optionally, after the AF receives the PDU set loss rate, an application layer of the AF may perform corresponding handling based on the PDU set loss rate, for example, may adjust a bit rate or adjust FEC redundancy.

In the foregoing solution, the AF requests to obtain the PDU set loss rate from a core network, and the base station monitors the PDU set loss rate of the downlink PDU set, and exposes the PDU set loss rate to the outside, that is, exposes the PDU set loss rate to the AF, so that the AF can perform corresponding handling based on the PDU set loss rate, thereby avoiding blind control of a service layer, and improving service experience.

FIG. 4 is a schematic flowchart of a communication method according to an embodiment of this application. This embodiment is described for monitoring and exposing a PDU set loss rate to the outside for an uplink direction. For example, UE monitors the PDU set loss rate, and exposes a monitoring result to the outside via a user plane or a control plane. The embodiment in FIG. 4 is a specific example according to Implementation method 1 in the embodiment in FIG. 2, and the UE is a specific example of the first network element in the embodiment in FIG. 2.

The method includes the following steps.

Step 401: An AF sends a subscription request to a PCF. Correspondingly, the PCF receives the subscription request.

The subscription request includes service flow description information, a PDU set loss rate event, and a monitoring trigger condition and/or a reporting trigger condition. The subscription request is used to request to subscribe to the PDU set loss rate from the PCF.

The service flow description information indicates a to-be-monitored service flow, and the service flow description information may be an IP 3-tuple, an IP 5-tuple, or the like of the service flow.

The monitoring trigger condition indicates a condition for triggering monitoring of the PDU set loss rate. For example, the monitoring trigger condition indicates periodically triggered monitoring, or indicates event-triggered monitoring. When the monitoring trigger condition indicates the periodically triggered monitoring, the monitoring trigger condition may include a monitoring periodicity, or the periodicity is preconfigured or predetermined in a protocol. The event-triggered monitoring may occur, for example, when a quantity of lost PDU sets is greater than a preset threshold, or a quantity of lost PDU data packets is greater than a preset threshold, or a network congestion degree exceeds a preset threshold.

The reporting trigger condition indicates a condition for triggering reporting of the PDU set loss rate. For example, the reporting trigger condition indicates periodically triggered reporting, or indicates event-triggered reporting. When the reporting trigger condition indicates the periodically triggered reporting, the reporting trigger condition may include a reporting periodicity, or the periodicity is preconfigured or predetermined in a protocol. The event-triggered monitoring may occur, for example, when a quantity of lost PDU sets is greater than a preset threshold, or a quantity of lost PDU data packets is greater than a preset threshold, or a network congestion degree exceeds a preset threshold, or the PDU set loss rate is greater than a preset threshold.

It should be noted that the monitoring trigger condition may be the same as or different from the reporting trigger condition. When the monitoring trigger condition is the same as the reporting trigger condition, the monitoring trigger condition and the reporting trigger condition may be collectively referred to as a trigger condition.

Optionally, the subscription request further includes a monitoring window, and the monitoring window indicates a time length of monitoring, for example, specifically one hour or two hours.

Optionally, the subscription request further includes a reporting indication, and the reporting indication indicates (or is used to trigger or cause) to send the monitoring result to a UPF. It may be understood as that the reporting indication indicates (or is used to trigger or cause) to expose the monitoring result to the outside via the user plane. Alternatively, the reporting indication indicates (or is used to trigger or cause) to send the monitoring result to an SMF. It may be understood as that the reporting indication indicates (or is used to trigger or cause) to expose the monitoring result to the outside via the control plane.

In an implementation method, the AF may be a third-party application server, or an application server in a 5G core network. If the AF is in a trusted domain, the AF may directly interact with the PCF, that is, send the subscription request to the PCF by invoking a service interface of the PCF, for example, an Npcf_PolicyAuthorization service interface or an Npcf_EventExposure service interface. If the AF is in an untrusted domain, the AF needs to interact with the PCF via a NEF. The AF invokes a service interface of the NEF, for example, an Nnef_AFSessionWithQoS service interface or an Nnef_EventExposure service interface, to send the subscription request to the PCF. Then, the NEF correspondingly invokes a service interface of the PCF to send the subscription request to the PCF, so that the PCF receives the subscription request.

For a definition of the PDU set loss rate, refer to the descriptions in Implementation method 1 in the embodiment in FIG. 2. Details are not described again.

Step 402: The PCF generates a PCC rule.

For example, the PCF generates the PCC rule based on the subscription request and/or a local policy. The PCC rule includes the service flow description information, the PDU set loss rate event, and the monitoring trigger condition and/or the reporting trigger condition. Optionally, the PCC rule further includes at least one of the monitoring window or the reporting indication.

Step 403: The PCF sends the PCC rule to the SMF. Correspondingly, the SMF receives the PCC rule.

In an implementation method, if the UE initiates a PDU session establishment or modification procedure, the SMF actively initiates a session management policy association establishment or modification procedure, and obtains the PCC rule from the PCF.

In another implementation method, if the PCF initiates a session management policy association modification procedure, the PCF actively sends the PCC rule to the SMF.

Step 404: The SMF generates a monitoring parameter.

For example, the SMF generates the monitoring parameter according to the PCC rule from the PCF and/or a local policy.

The monitoring parameter includes a QFI, the PDU set loss rate event, and the monitoring trigger condition and/or the reporting trigger condition. Optionally, the monitoring parameter further includes at least one of the monitoring window or the reporting indication.

The QFI indicates a QoS flow corresponding to the service flow description information.

Step 405: The SMF sends the monitoring parameter to the UE. Correspondingly, the UE receives the monitoring parameter.

After step 405, a remaining PDU session establishment or modification procedure is completed. For details, refer to clause 4.3.2.1 of TS 23.502.

That the SMF sends the monitoring parameter to the UE may be specifically that the SMF sends the monitoring parameter to the UE via an AMF and a base station.

Step 406: The UE determines the PDU set loss rate based on the monitoring parameter.

The UE monitors a PDU set loss rate of an uplink PDU set based on the PDU set loss rate event and the monitoring trigger condition in the monitoring parameter.

Step 407: The UE sends the PDU set loss rate.

In an implementation method, if the reporting indication indicates (or is used to trigger or cause) to send the monitoring result to the UPF, step 407 is specifically as follows: The UE adds the PDU set loss rate to a PDCP layer header of an uplink data packet, and sends the uplink data packet to the base station. Then, the base station adds the PDU set loss rate to a GTP-U layer of an uplink data packet, and reports the uplink data packet to the UPF. Then, the UPF sends the PDU set loss rate to the AF, or the UPF sends the PDU set loss rate to the AF via the NEF.

In another implementation method, if the reporting indication indicates (or is used to trigger or cause) to send the monitoring result to the SMF, step 407 is specifically as follows: The UE sends the PDU set loss rate to the SMF. Then, the SMF sends the PDU set loss rate to the PCF. The PCF sends the PDU set loss rate to the AF, or the PCF sends the PDU set loss rate to the AF via the NEF.

Optionally, after the AF receives the PDU set loss rate, an application layer of the AF may perform corresponding handling based on the PDU set loss rate, for example, may adjust a bit rate or adjust FEC redundancy.

In the foregoing solution, the AF requests to obtain the PDU set loss rate from a core network, and the UE monitors the PDU set loss rate of the uplink PDU set, and exposes the PDU set loss rate to the outside, that is, exposes the PDU set loss rate to the AF, so that the application layer of the AF can perform corresponding handling based on the PDU set loss rate, thereby avoiding blind control of a service layer, and improving service experience.

FIG. 5 is a schematic flowchart of a communication method according to an embodiment of this application. This embodiment is described for monitoring and exposing a PDU set loss rate to the outside for an uplink direction. For example, a modulation layer (modem) of UE monitors a PDU set delay, and exposes a monitoring result to an application layer of the UE. The modulation layer of the UE is mainly responsible for wireless receiving and sending, and related functions.

The method includes the following steps.

Step 501: The application layer of the UE sends a subscription request to the modulation layer of the UE. Correspondingly, the modulation layer of the UE receives the subscription request.

The subscription request includes service flow description information, a PDU set loss rate event, and a monitoring trigger condition and/or a reporting trigger condition. The subscription request is used to request to subscribe to the PDU set loss rate from a PCF.

The service flow description information indicates a to-be-monitored service flow, and the service flow description information may be an IP 3-tuple, an IP 5-tuple, or the like of the service flow.

The monitoring trigger condition indicates a condition for triggering monitoring of the PDU set loss rate. For example, the monitoring trigger condition indicates periodically triggered monitoring, or indicates event-triggered monitoring. When the monitoring trigger condition indicates the periodically triggered monitoring, the monitoring trigger condition may include a monitoring periodicity, or the periodicity is preconfigured or predetermined in a protocol. The event-triggered monitoring may occur, for example, when a quantity of lost PDU sets is greater than a preset threshold, or a quantity of lost PDU data packets is greater than a preset threshold, or a network congestion degree exceeds a preset threshold.

The reporting trigger condition indicates a condition for triggering reporting of the PDU set loss rate. For example, the reporting trigger condition indicates periodically triggered reporting, or indicates event-triggered reporting. When the reporting trigger condition indicates the periodically triggered reporting, the reporting trigger condition may include a reporting periodicity, or the periodicity is preconfigured or predetermined in a protocol. The event-triggered monitoring may occur, for example, when a quantity of lost PDU sets is greater than a preset threshold, or a quantity of lost PDU data packets is greater than a preset threshold, or a network congestion degree exceeds a preset threshold, or the PDU set loss rate is greater than a preset threshold.

It should be noted that the monitoring trigger condition may be the same as or different from the reporting trigger condition. When the monitoring trigger condition is the same as the reporting trigger condition, the monitoring trigger condition and the reporting trigger condition may be collectively referred to as a trigger condition.

Optionally, the subscription request further includes a monitoring window, and the monitoring window indicates a time length of monitoring, for example, specifically one hour or two hours.

Optionally, the subscription request further includes a reporting indication, and the reporting indication indicates (or is used to trigger or cause) to report the monitoring result through an interaction interface between the modulation layer of the UE and the application layer of the UE, that is, the modulation layer of the UE sends the monitoring result to the application layer of the UE.

A specific meaning of the PDU set loss rate is the same as the descriptions in step 401 in the embodiment in FIG. 4.

Step 502: The modulation layer of the UE determines the PDU set loss rate.

The modulation layer of the UE monitors a PDU set loss rate of an uplink PDU set based on the PDU set loss rate event and the monitoring trigger condition in the subscription request.

It should be noted that the modulation layer of the UE may determine a corresponding QFI based on the service flow description information in the subscription request, and then determine a PDU set loss rate of a QoS flow indicated by the QFI.

Step 503: The modulation layer of the UE sends the PDU set loss rate.

Step 503 is specifically as follows: The modulation layer of the UE sends the PDU set loss rate to the application layer of the UE.

Optionally, after the application layer of the UE receives the PDU set loss rate, the application layer of the UE may perform corresponding handling based on the PDU set loss rate, for example, may adjust a bit rate or adjust FEC redundancy.

In the foregoing solution, the application layer of the UE requests to obtain the PDU set loss rate, and the modulation layer of the UE monitors the PDU set loss rate of the uplink PDU set, and exposes the PDU set loss rate to the outside, that is, exposes the PDU set loss rate to the application layer of the UE, so that the application layer of the UE can perform corresponding handling based on the PDU set loss rate, thereby avoiding blind control of a service layer, and improving service experience.

FIG. 6 is a schematic flowchart of a communication method according to an embodiment of this application. This embodiment is described for monitoring and exposing a PDU set delay to the outside for a downlink direction. For example, a base station monitors the PDU set delay, and exposes a monitoring result to the outside via a user plane or a control plane. The embodiment in FIG. 6 is a specific example according to Implementation method 2 in the embodiment in FIG. 2, and the base station is a specific example of the first network element in the embodiment in FIG. 2.

The method includes the following steps.

Step 601: An AF sends a subscription request to a PCF. Correspondingly, the PCF receives the subscription request.

The subscription request includes service flow description information, a PDU set delay event (PDU Set Delay Event), and a monitoring trigger condition and/or a reporting trigger condition. The subscription request is used to request to subscribe to the PDU set delay from the PCF.

The service flow description information indicates a to-be-monitored service flow, and the service flow description information may be an IP 3-tuple, an IP 5-tuple, or the like of the service flow.

The monitoring trigger condition indicates a condition for triggering monitoring of the PDU set delay. For example, the monitoring trigger condition indicates periodically triggered monitoring, or indicates event-triggered monitoring. When the monitoring trigger condition indicates the periodically triggered monitoring, the monitoring trigger condition may include a monitoring periodicity, or the periodicity is preconfigured or predetermined in a protocol. The event-triggered monitoring may occur, for example, when a maximum delay (or an average delay) of a PDU set is greater than a preset threshold, or a network congestion degree exceeds a preset threshold.

The reporting trigger condition indicates a condition for triggering reporting of the PDU set delay. For example, the reporting trigger condition indicates periodically triggered reporting, or indicates event-triggered reporting. When the reporting trigger condition indicates the periodically triggered reporting, the reporting trigger condition may include a reporting periodicity, or the periodicity is preconfigured or predetermined in a protocol. The event-triggered monitoring may occur, for example, when a maximum delay (or an average delay) of a PDU set is greater than a preset threshold, or a network congestion degree exceeds a preset threshold.

It should be noted that the monitoring trigger condition may be the same as or different from the reporting trigger condition. When the monitoring trigger condition is the same as the reporting trigger condition, the monitoring trigger condition and the reporting trigger condition may be collectively referred to as a trigger condition.

Optionally, the subscription request further includes a monitoring window, and the monitoring window indicates a time length of monitoring, for example, specifically one hour or two hours.

Optionally, the subscription request further includes a reporting indication, and the reporting indication indicates (or is used to trigger or cause) to send the monitoring result to a UPF. It may be understood as that the reporting indication indicates (or is used to trigger or cause) to expose the monitoring result to the outside via the user plane. Alternatively, the reporting indication indicates to send the monitoring result to an SMF. It may be understood as that the reporting indication indicates (or is used to trigger or cause) to expose the monitoring result to the outside via the control plane.

In an implementation method, the AF may be a third-party application server, or an application server in a 5G core network. If the AF is in a trusted domain, the AF may directly interact with the PCF, that is, send the subscription request to the PCF by invoking a service interface of the PCF, for example, an Npcf_PolicyAuthorization service interface or an Npcf_EventExposure service interface. If the AF is in an untrusted domain, the AF needs to interact with the PCF via a NEF. The AF invokes a service interface of the NEF, for example, an Nnef_AFSessionWithQoS service interface or an Nnef_EventExposure service interface, to send the subscription request to the PCF. Then, the NEF correspondingly invokes a service interface of the PCF to send the subscription request to the PCF, so that the PCF receives the subscription request.

For a definition of the PDU set delay, refer to the descriptions in Implementation method 2 in the embodiment in FIG. 2. Details are not described again.

Step 602: The PCF generates a PCC rule.

For example, the PCF generates the PCC rule based on the subscription request and/or a local policy. The PCC rule includes the service flow description information, the PDU set delay event, and the monitoring trigger condition and/or the reporting trigger condition. Optionally, the PCC rule further includes at least one of the monitoring window, the reporting indication, or a QoS monitoring policy.

Step 603: The PCF sends the PCC rule to the SMF. Correspondingly, the SMF receives the PCC rule.

In an implementation method, if UE initiates a PDU session establishment or modification procedure, the SMF actively initiates a session management policy association establishment or modification procedure, and obtains the PCC rule from the PCF.

In another implementation method, if the PCF initiates a session management policy association modification procedure, the PCF actively sends the PCC rule to the SMF.

Step 604: The SMF indicates the base station and the UPF to monitor a QoS measurement delay for an N3 segment between the base station and the UPF.

The QoS measurement delay for the N3 segment between the base station and the UPF is a delay needed for data packet or PDU set transmission between the base station and the UPF.

The QoS measurement delay for the N3 segment monitored by the base station and the UPF may be considered as a dynamic delay, that is, a QoS delay that needs to be obtained through dynamic measurement.

In an implementation method, the SMF sends indication information to the base station and the UPF according to the QoS monitoring policy in the PCC rule, to indicate the base station and the UPF to monitor the QoS measurement delay for the N3 segment between the base station and the UPF.

Optionally, the UPF may further report the QoS measurement delay for the N3 segment between the base station and the UPF to the SMF, and the SMF may further report the QoS measurement delay for the N3 segment between the base station and the UPF to the PCF.

Step 604 is an optional step.

Step 605: The SMF generates a monitoring parameter.

For example, the SMF generates the monitoring parameter according to the PCC rule from the PCF and/or a local policy.

The monitoring parameter includes a QFI, the PDU set delay event, and the monitoring trigger condition and/or the reporting trigger condition. Optionally, the monitoring parameter further includes at least one of the monitoring window or the reporting indication.

The QFI indicates a QoS flow corresponding to the service flow description information.

Step 606: The SMF sends the monitoring parameter to the base station. Correspondingly, the base station receives the monitoring parameter.

After step 606, a remaining PDU session establishment or modification procedure is completed. For details, refer to clause 4.3.2.1 of TS 23.502.

That the SMF sends the monitoring parameter to the base station may be specifically that the SMF sends the monitoring parameter to the base station via an AMF.

Step 607: The base station determines the PDU set delay based on the monitoring parameter.

For example, the base station monitors a PDU set delay of a downlink PDU set based on the PDU set delay event and the monitoring trigger condition in the monitoring parameter.

Step 608: The base station sends the PDU set delay.

In an implementation method, if the reporting indication indicates (or is used to trigger or cause) to send the monitoring result to the UPF, step 608 is specifically as follows: The base station adds the monitoring result to a GTP-U layer of an uplink data packet, and reports the uplink data packet to the UPF. Then, the UPF sends the monitoring result to the AF, or the UPF sends the monitoring result to the AF via the NEF. The monitoring result is the PDU set delay, or a sum of the PDU set delay and a CN PDB for the N3 segment. The CN PDB for the N3 segment is a delay needed for data packet or PDU set transmission between the base station and the UPF, and the CN PDB for the N3 segment may be considered as a static delay.

In another implementation method, if the reporting indication indicates (or is used to trigger or cause) to send the monitoring result to the UPF, step 608 is specifically as follows: The base station adds the PDU set delay to a GTP-U layer of an uplink data packet, and reports the uplink data packet to the UPF. The UPF determines the monitoring result based on the PDU set delay. Then, the UPF sends the monitoring result to the AF, or the UPF sends the monitoring result to the AF via the NEF. The monitoring result is a sum of the PDU set delay and a CN PDB for the N3 segment, or a sum of the PDU set delay and the QoS measurement delay for the N3 segment.

In another implementation method, if the reporting indication indicates (or is used to trigger or cause) to send the monitoring result to the SMF, step 608 is specifically as follows: The base station sends the monitoring result to the SMF. Then, the SMF sends the monitoring result to the PCF. The PCF sends the monitoring result to the AF, or the PCF sends the monitoring result to the AF via the NEF. The monitoring result is the PDU set delay, or a sum of the PDU set delay and a CN PDB for the N3 segment.

In another implementation method, if the reporting indication indicates (or is used to trigger or cause) to send the monitoring result to the SMF, step 608 is specifically as follows: The base station sends the PDU set delay to the SMF. Then, the SMF sends the PDU set delay to the PCF. The PCF determines the monitoring result based on the PDU set delay. Then, the PCF sends the monitoring result to the AF, or the PCF sends the monitoring result to the AF via the NEF. The monitoring result is a sum of the PDU set delay and a CN PDB for the N3 segment, or a sum of the PDU set delay and the QoS measurement delay for the N3 segment.

In another implementation method, if the reporting indication indicates (or is used to trigger or cause) to send the monitoring result to the SMF, step 608 is specifically as follows: The base station sends the PDU set delay to the SMF. Then, the SMF determines the monitoring result based on the PDU set delay, and sends the monitoring result to the PCF. Then, the PCF sends the monitoring result to the AF, or the PCF sends the monitoring result to the AF via the NEF. The monitoring result is a sum of the PDU set delay and a CN PDB for the N3 segment, or a sum of the PDU set delay and the QoS measurement delay for the N3 segment.

Optionally, after the AF receives the monitoring result, an application layer of the AF may perform corresponding handling based on the monitoring result, for example, may adjust a bit rate or adjust FEC redundancy.

In the foregoing solution, the AF requests to obtain the monitoring result from a core network, and the base station monitors the PDU set delay of the downlink PDU set, and exposes the PDU set delay to the outside, that is, exposes the PDU set delay to the AF, so that the AF can obtain the monitoring result, and the AF can perform corresponding handling based on the monitoring result, thereby avoiding blind control of a service layer, and improving service experience.

FIG. 7 is a schematic flowchart of a communication method according to an embodiment of this application. This embodiment is described for monitoring and exposing a PDU set delay to the outside for an uplink direction. For example, UE monitors the PDU set delay, and exposes a monitoring result to the outside via a user plane or a control plane. The embodiment in FIG. 7 is a specific example according to Implementation method 2 in the embodiment in FIG. 2, and the UE is a specific example of the first network element in the embodiment in FIG. 2.

The method includes the following steps.

Step 701: An AF sends a subscription request to a PCF. Correspondingly, the PCF receives the subscription request.

The subscription request includes service flow description information, a PDU set delay event, and a monitoring trigger condition and/or a reporting trigger condition. The subscription request is used to request to subscribe to the PDU set delay from the PCF.

The service flow description information indicates a to-be-monitored service flow, and the service flow description information may be an IP 3-tuple, an IP 5-tuple, or the like of the service flow.

The monitoring trigger condition indicates a condition for triggering monitoring of the PDU set delay. For example, the monitoring trigger condition indicates periodically triggered monitoring, or indicates event-triggered monitoring. When the monitoring trigger condition indicates the periodically triggered monitoring, the monitoring trigger condition may include a monitoring periodicity, or the periodicity is preconfigured or predetermined in a protocol. The event-triggered monitoring may occur, for example, when a maximum delay (or an average delay) of a PDU set is greater than a preset threshold, or a network congestion degree exceeds a preset threshold.

The reporting trigger condition indicates a condition for triggering reporting of the PDU set delay. For example, the reporting trigger condition indicates periodically triggered reporting, or indicates event-triggered reporting. When the reporting trigger condition indicates the periodically triggered reporting, the reporting trigger condition may include a reporting periodicity, or the periodicity is preconfigured or predetermined in a protocol. The event-triggered monitoring may occur, for example, when a maximum delay (or an average delay) of a PDU set is greater than a preset threshold, or a network congestion degree exceeds a preset threshold.

It should be noted that the monitoring trigger condition may be the same as or different from the reporting trigger condition. When the monitoring trigger condition is the same as the reporting trigger condition, the monitoring trigger condition and the reporting trigger condition may be collectively referred to as a trigger condition.

Optionally, the subscription request further includes a monitoring window, and the monitoring window indicates a time length of monitoring, for example, specifically one hour or two hours.

Optionally, the subscription request further includes a reporting indication, and the reporting indication indicates (or is used to trigger or cause) to send the monitoring result to a UPF. It may be understood as that the reporting indication indicates (or is used to trigger or cause) to expose the monitoring result to the outside via the user plane. Alternatively, the reporting indication indicates (or is used to trigger or cause) to send the monitoring result to an SMF. It may be understood as that the reporting indication indicates (or is used to trigger or cause) to expose the monitoring result to the outside via the control plane.

In an implementation method, the AF may be a third-party application server, or an application server in a 5G core network. If the AF is in a trusted domain, the AF may directly interact with the PCF, that is, send the subscription request to the PCF by invoking a service interface of the PCF, for example, an Npcf_PolicyAuthorization service interface or an Npcf_EventExposure service interface. If the AF is in an untrusted domain, the AF needs to interact with the PCF via a NEF. The AF invokes a service interface of the NEF, for example, an Nnef_AFSessionWithQoS service interface or an Nnef_EventExposure service interface, to send the subscription request to the PCF. Then, the NEF correspondingly invokes a service interface of the PCF to send the subscription request to the PCF, so that the PCF receives the subscription request.

For a definition of the PDU set delay, refer to the descriptions in Implementation method 2 in the embodiment in FIG. 2. Details are not described again.

Step 702: The PCF generates a PCC rule.

For example, the PCF generates the PCC rule based on the subscription request and/or a local policy. The PCC rule includes the service flow description information, the PDU set delay event, and the monitoring trigger condition and/or the reporting trigger condition. Optionally, the PCC rule further includes at least one of the monitoring window, the reporting indication, or a QoS monitoring policy.

Step 703: The PCF sends the PCC rule to the SMF. Correspondingly, the SMF receives the PCC rule.

In an implementation method, if the UE initiates a PDU session establishment or modification procedure, the SMF actively initiates a session management policy association establishment or modification procedure, and obtains the PCC rule from the PCF.

In another implementation method, if the PCF initiates a session management policy association modification procedure, the PCF actively sends the PCC rule to the SMF.

Step 704: The SMF indicates a base station and the UPF to monitor a QoS measurement delay for an N3 segment between the base station and the UPF.

The QoS measurement delay for the N3 segment between the base station and the UPF is a delay needed for data packet or PDU set transmission between the base station and the UPF.

The QoS measurement delay for the N3 segment monitored by the base station and the UPF may be considered as a dynamic delay.

In an implementation method, the SMF sends indication information to the base station and the UPF according to the QoS monitoring policy in the PCC rule, to indicate the base station and the UPF to monitor the QoS measurement delay for the N3 segment between the base station and the UPF.

Optionally, the UPF may further report the QoS measurement delay for the N3 segment between the base station and the UPF to the SMF, and the SMF may further report the QoS measurement delay for the N3 segment between the base station and the UPF to the PCF.

Step 704 is an optional step.

Step 705: The SMF generates a monitoring parameter.

For example, the SMF generates the monitoring parameter according to the PCC rule from the PCF and/or a local policy.

The monitoring parameter includes a QFI, the PDU set delay event, and the monitoring trigger condition and/or the reporting trigger condition. Optionally, the monitoring parameter further includes at least one of the monitoring window or the reporting indication.

The QFI indicates a QoS flow corresponding to the service flow description information.

Step 706: The SMF sends the monitoring parameter to the UE. Correspondingly, the UE receives the monitoring parameter.

After step 706, a remaining PDU session establishment or modification procedure is completed. For details, refer to clause 4.3.2.1 of TS 23.502.

That the SMF sends the monitoring parameter to the UE may be specifically that the SMF sends the monitoring parameter to the UE via an AMF.

Step 707: The UE determines the PDU set delay based on the monitoring parameter.

The UE monitors a PDU set delay of a uplink PDU set based on the PDU set delay event and the monitoring trigger condition in the monitoring parameter.

Step 708: The UE sends the PDU set delay.

In an implementation method, if the reporting indication indicates (or is used to trigger or cause) to send the monitoring result to the UPF, step 708 is specifically as follows: The UE adds the monitoring result to a PDCP layer header of an uplink data packet, and sends the uplink data packet to the base station. Then, the base station adds the monitoring result to a GTP-U layer of an uplink data packet, and reports the uplink data packet to the UPF. Then, the UPF sends the monitoring result to the AF, or the UPF sends the monitoring result to the AF via the NEF. The monitoring result is the PDU set delay, or a sum of the PDU set delay and a CN PDB for the N3 segment. The CN PDB for the N3 segment is a delay needed for data packet or PDU set transmission between the base station and the UPF, and the CN PDB for the N3 segment may be considered as a static delay.

In another implementation method, if the reporting indication indicates (or is used to trigger or cause) to send the monitoring result to the UPF, step 708 is specifically as follows: The UE adds the PDU set delay to a PDCP layer header of an uplink data packet, and sends the uplink data packet to the base station. Then, the base station adds the PDU set delay to a GTP-U layer of an uplink data packet, and reports the uplink data packet to the UPF. The UPF determines the monitoring result based on the PDU set delay. Then, the UPF sends the monitoring result to the AF, or the UPF sends the monitoring result to the AF via the NEF. The monitoring result is a sum of the PDU set delay and a CN PDB for the N3 segment, or a sum of the PDU set delay and the QoS measurement delay for the N3 segment.

In another implementation method, if the reporting indication indicates (or is used to trigger or cause) to send the monitoring result to the SMF, step 708 is specifically as follows: The UE sends the monitoring result to the SMF. Then, the SMF sends the monitoring result to the PCF. The PCF sends the monitoring result to the AF, or the PCF sends the monitoring result to the AF via the NEF. The monitoring result is the PDU set delay, or a sum of the PDU set delay and a CN PDB for the N3 segment. (or trigger or cause)

In another implementation method, if the reporting indication indicates (or is used to trigger or cause) to send the monitoring result to the SMF, step 708 is specifically as follows: The UE sends the PDU set delay to the SMF. Then, the SMF sends the PDU set delay to the PCF. The PCF determines the monitoring result based on the PDU set delay. Then, the PCF sends the monitoring result to the AF, or the PCF sends the monitoring result to the AF via the NEF. The monitoring result is a sum of the PDU set delay and a CN PDB for the N3 segment, or a sum of the PDU set delay and the QoS measurement delay for the N3 segment.

In another implementation method, if the reporting indication indicates (or is used to trigger or cause) to send the monitoring result to the SMF, step 708 is specifically as follows: The UE sends the PDU set delay to the SMF. Then, the SMF determines the monitoring result based on the PDU set delay, and sends the monitoring result to the PCF. Then, the PCF sends the monitoring result to the AF, or the PCF sends the monitoring result to the AF via the NEF. The monitoring result is a sum of the PDU set delay and a CN PDB for the N3 segment, or a sum of the PDU set delay and the QoS measurement delay for the N3 segment.

Optionally, after the AF receives the monitoring result, an application layer of the AF may perform corresponding handling based on the monitoring result, for example, may adjust a bit rate or adjust FEC redundancy.

In the foregoing solution, the AF requests to obtain the monitoring result from a core network, and the UE monitors the PDU set delay of the uplink PDU set, and exposes the PDU set delay to the outside, that is, exposes the PDU set delay to the AF, so that the AF can obtain the monitoring result, and the AF can perform corresponding handling based on the monitoring result, thereby avoiding blind control of a service layer, and improving service experience.

FIG. 8 is a schematic flowchart of a communication method according to an embodiment of this application. This embodiment is described for monitoring and exposing a PDU set delay to the outside for an uplink direction. For example, a modulation layer of UE monitors the PDU set delay, and exposes a monitoring result to an application layer of the UE. The method includes the following steps.

Step 801: The application layer of the UE sends a subscription request to the modulation layer of the UE. Correspondingly, the modulation layer of the UE receives the subscription request.

The subscription request includes service flow description information, a PDU set delay event, and a monitoring trigger condition and/or a reporting trigger condition. The subscription request is used to request to subscribe to the PDU set delay from a PCF.

The service flow description information indicates a to-be-monitored service flow, and the service flow description information may be an IP 3-tuple, an IP 5-tuple, or the like of the service flow.

The monitoring trigger condition indicates a condition for triggering monitoring of the PDU set delay. For example, the monitoring trigger condition indicates periodically triggered monitoring, or indicates event-triggered monitoring. When the monitoring trigger condition indicates the periodically triggered monitoring, the monitoring trigger condition may include a monitoring periodicity, or the periodicity is preconfigured or predetermined in a protocol. The event-triggered monitoring may occur, for example, when a maximum delay (or an average delay) of a PDU set is greater than a preset threshold, or a network congestion degree exceeds a preset threshold.

The reporting trigger condition indicates a condition for triggering reporting of the PDU set delay. For example, the reporting trigger condition indicates periodically triggered reporting, or indicates event-triggered reporting. When the reporting trigger condition indicates the periodically triggered reporting, the reporting trigger condition may include a reporting periodicity, or the periodicity is preconfigured or predetermined in a protocol. The event-triggered monitoring may occur, for example, when a maximum delay (or an average delay) of a PDU set is greater than a preset threshold, or a network congestion degree exceeds a preset threshold.

It should be noted that the monitoring trigger condition may be the same as or different from the reporting trigger condition. When the monitoring trigger condition is the same as the reporting trigger condition, the monitoring trigger condition and the reporting trigger condition may be collectively referred to as a trigger condition.

Optionally, the subscription request further includes a monitoring window, and the monitoring window indicates a time length of monitoring, for example, specifically one hour or two hours.

Optionally, the subscription request further includes a reporting indication, and the reporting indication indicates (or is used to trigger or cause) to report the monitoring result through an interaction interface between the modulation layer of the UE and the application layer of the UE, that is, the modulation layer of the UE sends the monitoring result to the application layer of the UE.

A specific meaning of the PDU set delay is the same as the descriptions in step 707 in the embodiment in FIG. 7.

Step 802: The modulation layer of the UE determines the PDU set delay.

The modulation layer of the UE monitors a PDU set delay of an uplink PDU set based on the PDU set delay event and the monitoring trigger condition in the subscription request.

It should be noted that the modulation layer of the UE may determine a corresponding QFI based on the service flow description information in the subscription request, and then determine a PDU set delay of a QoS flow indicated by the QFI.

Step 803: The modulation layer of the UE sends the PDU set delay.

Step 803 is specifically as follows: The modulation layer of the UE sends the monitoring result to the application layer of the UE. The monitoring result is the PDU set delay, or a sum of the PDU set delay and a CN PDB for an N3 segment, or a sum of the PDU set delay and a QoS measurement delay for an N3 segment. The CN PDB for the N3 segment is a delay needed for data packet or PDU set transmission between a base station and a UPF, and the CN PDB for the N3 segment may be considered as a static delay. The QoS measurement delay for the N3 segment is a delay that is monitored by an SMF or the PCF and that is needed for data packet or PDU set transmission between the base station and the UPF.

Optionally, after the application layer of the UE receives the monitoring result, the application layer of the UE may perform corresponding handling based on the monitoring result, for example, may adjust a bit rate or adjust FEC redundancy.

In the foregoing solution, the application layer of the UE requests to obtain the PDU set delay, and the modulation layer of the UE monitors the PDU set delay of the uplink PDU set, and exposes the monitoring result to the outside, that is, exposes the monitoring result to the application layer of the UE, so that the application layer of the UE can perform corresponding handling based on the monitoring result, thereby avoiding blind control of a service layer, and improving service experience.

FIG. 9 is a schematic flowchart of a communication method according to an embodiment of this application. This embodiment is a monitoring and exposing mechanism oriented to a PDU set spread delay. The PDU set spread delay is monitored and exposed to the outside by a UPF. The embodiment in FIG. 9 is a specific example according to Implementation method 3 in the embodiment in FIG. 2, and the UPF is a specific example of the first network element in the embodiment in FIG. 2.

The method includes the following steps.

Step 901: An AF sends a subscription request to a PCF. Correspondingly, the PCF receives the subscription request.

The subscription request includes service flow description information, a PDU set spread delay event (PDU Set Spread Delay Event), and a monitoring trigger condition and/or a reporting trigger condition. The subscription request is used to request to subscribe to the PDU set spread delay from the PCF.

The service flow description information indicates a to-be-monitored service flow, and the service flow description information may be an IP 3-tuple, an IP 5-tuple, or the like of the service flow.

The monitoring trigger condition indicates a condition for triggering monitoring of the PDU set spread delay. For example, the monitoring trigger condition indicates periodically triggered monitoring, or indicates event-triggered monitoring. When the monitoring trigger condition indicates the periodically triggered monitoring, the monitoring trigger condition may include a monitoring periodicity, or the periodicity is preconfigured or predetermined in a protocol. The event-triggered monitoring may occur, for example, when a maximum spread delay (or an average spread delay) of a PDU set is greater than a preset threshold, or a network congestion degree exceeds a preset threshold.

The reporting trigger condition indicates a condition for triggering reporting of the PDU set spread delay. For example, the reporting trigger condition indicates periodically triggered reporting, or indicates event-triggered reporting. When the reporting trigger condition indicates the periodically triggered reporting, the reporting trigger condition may include a reporting periodicity, or the periodicity is preconfigured or predetermined in a protocol. The event-triggered monitoring may occur, for example, when a maximum spread delay (or an average spread delay) of a PDU set is greater than a preset threshold, or a network congestion degree exceeds a preset threshold.

It should be noted that the monitoring trigger condition may be the same as or different from the reporting trigger condition. When the monitoring trigger condition is the same as the reporting trigger condition, the monitoring trigger condition and the reporting trigger condition may be collectively referred to as a trigger condition.

Optionally, the subscription request further includes a monitoring window, and the monitoring window indicates a time length of monitoring, for example, specifically one hour or two hours.

Optionally, the subscription request further includes a reporting indication, and the reporting indication indicates (or is used to trigger or cause) to send a monitoring result to an SMF. Alternatively, the reporting indication indicates (or is used to trigger or cause) to send a monitoring result to a NEF.

In an implementation method, the AF may be a third-party application server, or an application server in a 5G core network. If the AF is in a trusted domain, the AF may directly interact with the PCF, that is, send the subscription request to the PCF by invoking a service interface of the PCF, for example, an Npcf_PolicyAuthorization service interface or an Npcf_EventExposure service interface. If the AF is in an untrusted domain, the AF needs to interact with the PCF via the NEF. The AF invokes a service interface of the NEF, for example, an Nnef_AFSessionWithQoS service interface or an Nnef_EventExposure service interface, to send the subscription request to the PCF. Then, the NEF correspondingly invokes a service interface of the PCF to send the subscription request to the PCF, so that the PCF receives the subscription request.

For a definition of the PDU set spread delay, refer to the descriptions in Implementation method 3 in the embodiment in FIG. 2. Details are not described again.

Step 902: The PCF generates a PCC rule.

For example, the PCF generates the PCC rule based on the subscription request and/or a local policy. The PCC rule includes the service flow description information, the PDU set spread delay event, and the monitoring trigger condition and/or the reporting trigger condition. Optionally, the PCC rule further includes at least one of the monitoring window, the reporting indication, or a QoS monitoring configuration.

Step 903: The PCF sends the PCC rule to the SMF. Correspondingly, the SMF receives the PCC rule.

In an implementation method, if UE initiates a PDU session establishment or modification procedure, the SMF actively initiates a session management policy association establishment or modification procedure, and obtains the PCC rule from the PCF.

In another implementation method, if the PCF initiates a session management policy association modification procedure, the PCF actively sends the PCC rule to the SMF.

Step 904: The SMF generates a monitoring parameter.

For example, the SMF generates the monitoring parameter according to the PCC rule from the PCF and/or a local policy.

The monitoring parameter includes a QFI, the PDU set spread delay event, and the monitoring trigger condition and/or the reporting trigger condition. Optionally, the monitoring parameter further includes at least one of the monitoring window or the reporting indication.

The QFI indicates a QoS flow corresponding to the service flow description information.

Step 905: The SMF sends the monitoring parameter to the UPF. Correspondingly, the UPF receives the monitoring parameter.

After step 905, a remaining PDU session establishment or modification procedure is completed. For details, refer to clause 4.3.2.1 of TS 23.502.

Step 906: The UPF determines the PDU set spread delay based on the monitoring parameter.

The UPF monitors a PDU set spread delay of a downlink PDU set based on the PDU set spread delay event and the monitoring trigger condition in the monitoring parameter.

Step 907: The UPF sends the PDU set spread delay.

For example, if the reporting indication indicates (or is used to trigger or cause) to send the monitoring result to the SMF, step 907 is specifically as follows: The UPF sends the PDU set spread delay to the SMF. The SMF sends the PDU set spread delay to the PCF. The PCF sends the PDU set spread delay to the AF, or the PCF sends the PDU set spread delay to the AF via the NEF.

For example, if the reporting indication indicates (or is used to trigger or cause) to send the monitoring result to the NEF, step 907 is specifically as follows: The UPF sends the PDU set spread delay to the NEF. Then, the NEF sends the PDU set spread delay to the AF.

Optionally, after the AF receives the PDU set spread delay, an application layer of the AF may perform corresponding handling based on the PDU set spread delay, for example, may adjust a bit rate or adjust FEC redundancy.

In the foregoing solution, the AF requests to obtain the PDU set spread delay from a core network, and the UPF monitors the PDU set spread delay of the downlink PDU set, and exposes the PDU set spread delay to the outside, that is, exposes the PDU set spread delay to the AF, so that the AF can obtain the PDU set spread delay, and the AF can perform corresponding handling based on the PDU set spread delay, thereby avoiding blind control of a service layer, and improving service experience.

FIG. 10 is a schematic flowchart of a communication method according to an embodiment of this application. In this embodiment, an SMF exposes, to an AF, a result of whether PDU set handling is enabled, to guarantee that the AF can perceive a PDU set handling enabled status in a 5G network. The embodiment in FIG. 10 is a specific example according to Implementation method 4 in the embodiment in FIG. 2, and the SMF is a specific example of the first network element in the embodiment in FIG. 2.

The method includes the following steps.

Step 1001: The AF sends a subscription request to a PCF. Correspondingly, the PCF receives the subscription request.

The subscription request includes service flow description information, a PDU set QoS handling enabled status event, and/or a reporting trigger condition. The subscription request is used to request to subscribe to a PDU set QoS handling enabled status from the PCF.

The service flow description information indicates a to-be-monitored service flow, and the service flow description information may be an IP 3-tuple, an IP 5-tuple, or the like of the service flow.

The reporting trigger condition indicates a condition for triggering reporting of the PDU set QoS handling enabled status. For example, the reporting trigger condition indicates periodically triggered reporting, or indicates event-triggered reporting. When the reporting trigger condition indicates the periodically triggered reporting, the reporting trigger condition may include a reporting periodicity, or the periodicity is preconfigured or predetermined in a protocol.

It should be noted that a monitoring trigger condition may be the same as or different from the reporting trigger condition. When the monitoring trigger condition is the same as the reporting trigger condition, the monitoring trigger condition and the reporting trigger condition may be collectively referred to as a trigger condition.

Optionally, the subscription request further includes a reporting indication, and the reporting indication indicates (or is used to trigger or cause) to send a monitoring result to the PCF. Alternatively, the reporting indication indicates (or is used to trigger or cause) to send a monitoring result to a NEF.

In an implementation method, the AF may be a third-party application server, or an application server in a 5G core network. If the AF is in a trusted domain, the AF may directly interact with the PCF, that is, send the subscription request to the PCF by invoking a service interface of the PCF, for example, an Npcf_PolicyAuthorization service interface or an Npcf_EventExposure service interface. If the AF is in an untrusted domain, the AF needs to interact with the PCF via the NEF. The AF invokes a service interface of the NEF, for example, an Nnef_AFSessionWithQoS service interface or an Nnef_EventExposure service interface, to send the subscription request to the PCF. Then, the NEF correspondingly invokes a service interface of the PCF to send the subscription request to the PCF, so that the PCF receives the subscription request.

Step 1002: The PCF generates a PCC rule.

The PCF generates the PCC rule based on the subscription request and/or a local policy. The PCC rule includes the service flow description information, the PDU set QoS handling enabled status event, and/or the reporting trigger condition. Optionally, the PCC rule further includes the reporting indication.

Step 1003: The PCF sends the PCC rule to the SMF. Correspondingly, the SMF receives the PCC rule.

In an implementation method, if UE initiates a PDU session establishment or modification procedure, the SMF actively initiates a session management policy association establishment or modification procedure, and obtains the PCC rule from the PCF.

In another implementation method, if the PCF initiates a session management policy association modification procedure, the PCF actively sends the PCC rule to the SMF.

Step 1004: The SMF monitors the PDU set QoS handling enabled status according to the PCC rule.

In an implementation method, the SMF receives a capability indication from a base station, where the capability indication indicates that the base station has a PDU set QoS handling capability, and then the SMF monitors a PDU set QoS handling enabled status of a QoS flow based on the capability indication. For example, the SMF sends a PDU set QoS parameter to the base station based on the capability indication. After sending the PDU set QoS parameter, the SMF determines that PDU set QoS handling of the QoS flow is enabled, that is, the PDU set QoS handling enabled status of the QoS flow is enabled.

In another implementation method, the SMF sends a PDU set QoS parameter to a base station. Then, if the SMF receives a capability indication from the base station, where the capability indication indicates that the base station has a PDU set QoS handling capability, the SMF determines that PDU set QoS handling of a QoS flow is enabled, that is, a PDU set QoS handling enabled status of the QoS flow is enabled.

Step 1005: The SMF sends the PDU set QoS handling enabled status.

In an implementation method, if the reporting indication indicates (or is used to trigger or cause) to send the monitoring result to the PCF, step 1005 is specifically as follows: The SMF sends the PDU set QoS handling enabled status to the PCF. Then, the PCF directly sends the PDU set QoS handling enabled status to the AF, or sends the PDU set QoS handling enabled status to the AF via the NEF.

In another implementation method, if the reporting indication indicates (or is used to trigger or cause) to send the monitoring result to the NEF, step 1005 is specifically as follows: The SMF sends the PDU set QoS handling enabled status to the NEF. Then, the NEF sends the PDU set QoS handling enabled status to the AF.

Optionally, after the AF receives the PDU set QoS handling enabled status, an application layer of the AF may perform corresponding handling based on the PDU set QoS handling enabled status, for example, may adjust a bit rate or adjust FEC redundancy.

In the foregoing solution, the AF requests to obtain the PDU set QoS handling enabled status from a core network, and the SMF determines the PDU set QoS handling enabled status, and exposes the PDU set QoS handling enabled status to the outside, that is, exposes the PDU set QoS handling enabled status to the AF, so that the AF can obtain the PDU set QoS handling enabled status, and the AF can perform corresponding handling based on the PDU set QoS handling enabled status, thereby avoiding blind control of a service layer, and improving service experience.

It may be understood that, to implement functions in the foregoing embodiments, the first network element or the application function network element includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 11 and FIG. 12 are diagrams of structures of communication apparatuses according to embodiments of this application. The communication apparatuses may be configured to implement functions of the first network element or the application function network element in the foregoing method embodiments, and therefore can also achieve beneficial effects of the foregoing method embodiments. In embodiments of this application, the communication apparatus may be the first network element or the application function network element, or may be a module (for example, a chip) used in the first network element or the application function network element.

A communication apparatus 1100 shown in FIG. 11 includes a processing unit 1110 and a transceiver unit 1120. The communication apparatus 1100 is configured to implement the functions of the first network element or the application function network element in the foregoing method embodiments.

When the communication apparatus 1100 is configured to implement the functions of the first network element in the foregoing method embodiments, the transceiver unit 1120 is configured to receive first information, where the first information is used to monitor a PDU set carried in a QoS flow and report a monitoring result of the PDU set; the processing unit 1110 is configured to monitor, based on the first information, the PDU set carried in the QoS flow; and the transceiver unit 1120 is further configured to send the monitoring result of the PDU set to a second network element.

In a possible implementation method, the first information includes a PDU set loss rate event, and the PDU set loss rate event indicates that a monitored object is a PDU set loss rate; and that the processing unit 1110 is configured to monitor, based on the first information, the PDU set carried in the QoS flow specifically includes: being configured to monitor a PDU set loss rate of the QoS flow based on the first information.

In a possible implementation method, the first network element is an access network device, and the PDU set loss rate includes one or more of the following:
a proportion of PDU sets that fail to be sent by the access network device to a terminal device;
a proportion of PDU sets discarded due to data packet loss;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

In a possible implementation method, the first network element is a terminal device, and the PDU set loss rate includes one or more of the following:
a proportion of PDU sets that fail to be sent by the terminal device to an access network device;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

In a possible implementation method, the first information includes a PDU set delay event, and the PDU set delay event indicates that a monitored object is a PDU set delay; and that the processing unit 1110 is configured to monitor, based on the first information, the PDU set carried in the QoS flow specifically includes: being configured to monitor a PDU set delay of the QoS flow based on the first information.

In a possible implementation method, the first network element is an access network device, and the PDU set delay includes one or more of the following:
time used by the access network device to successfully transmit the PDU set to a terminal device;
time used by the access network device to successfully transmit the PDU set to a terminal device within a PDU set delay budget; or
time used by the access network device to successfully transmit the PDU set to a terminal device exceeding a PDU set delay budget.

In a possible implementation method, the first network element is a terminal device, and the PDU set delay includes one or more of the following:
time used by the terminal device to successfully transmit the PDU set to an access network device;
time used by the terminal device to successfully transmit the PDU set to an access network device within a PDU set delay budget; or
time used by the terminal device to successfully transmit the PDU set to an access network device exceeding a PDU set delay budget.

In a possible implementation method, the monitoring result includes the PDU set delay, or includes a sum of the PDU set delay and a CN PDB for an N3 segment.

In a possible implementation method, the first information includes a PDU set spread delay event, the PDU set spread delay event indicates that a monitored object is a PDU set spread delay, and the first network element is a user plane network element; and that the processing unit 1110 is configured to monitor, based on the first information, the PDU set carried in the QoS flow specifically includes: being configured to monitor a PDU set spread delay of the QoS flow based on the first information.

In a possible implementation method, the PDU set spread delay includes one or more of the following:
a time interval between arrival of a 1^{st} packet in the PDU set at the user plane network element and arrival of a last packet in the PDU set at the user plane network element;
a time interval between arrival of a 1^{st} packet in the PDU set at the user plane network element and departure of a last packet in the PDU set from the user plane network element;
a time interval between departure of a 1^{st} packet in the PDU set from the user plane network element and departure of a last packet in the PDU set from the user plane network element; or
a proportion of target PDU sets, where a time interval between arrival of a 1^{st} packet in the target PDU set at the user plane network element and arrival of a last packet in the target PDU set at the user plane network element does not exceed a preset threshold.

In a possible implementation method, the first information includes a PDU set QoS handling enabled status event, the PDU set QoS handling enabled status event indicates that a monitored object is a PDU set QoS handling enabled status, and the first network element is a session management network element; and that the processing unit 1110 is configured to monitor, based on the first information, the PDU set carried in the QoS flow specifically includes: being configured to monitor a PDU set QoS handling enabled status of the QoS flow based on the first information.

In a possible implementation method, that the processing unit 1110 is configured to monitor the PDU set QoS handling enabled status of the QoS flow specifically includes: being configured to: receive a capability indication from an access network device via the transceiver unit 1120, where the capability indication indicates that the access network device has a PDU set QoS handling capability; and monitor the PDU set QoS handling enabled status of the QoS flow based on the capability indication.

In a possible implementation method, that the processing unit 1110 is configured to monitor the PDU set QoS handling enabled status of the QoS flow based on the capability indication specifically includes: being configured to: if sending a PDU set QoS parameter to the access network device based on the capability indication via the transceiver unit 1120, determine that PDU set QoS handling of the QoS flow is enabled.

In a possible implementation method, that the processing unit 1110 is configured to monitor the PDU set QoS handling enabled status of the QoS flow specifically includes: being configured to: send a PDU set QoS parameter to an access network device via the transceiver unit 1120; and if receiving a capability indication from the access network device, determine that PDU set QoS handling of the QoS flow is enabled, where the capability indication indicates that the access network device has a PDU set QoS handling capability.

In a possible implementation method, the first information includes a reporting indication, and the reporting indication indicates to report the monitoring result of the PDU set to the second network element; and that the transceiver unit 1120 is configured to send the monitoring result of the PDU set to the second network element specifically includes: being configured to send the monitoring result to the second network element based on the reporting indication.

When the communication apparatus 1100 is configured to implement the functions of the application function network element in the foregoing method embodiments, the processing unit 1110 is configured to control the transceiver unit 1120 to send a subscription request, where the subscription request is used to subscribe to a monitoring result of a PDU set of a service flow; and receive the monitoring result of the PDU set of the service flow.

In a possible implementation method, the subscription request includes a PDU set loss rate event, and the PDU set loss rate event indicates that a monitored object is a PDU set loss rate; and that the processing unit 1110 is configured to control the transceiver unit 1120 to receive the monitoring result of the PDU set of the service flow specifically includes: being configured to control the transceiver unit 1120 to receive a PDU set loss rate of the service flow. In a possible implementation method, the PDU set loss rate is from an access network device, and the PDU set loss rate includes one or more of the following:
a proportion of PDU sets that fail to be sent by the access network device to a terminal device;
a proportion of PDU sets discarded due to data packet loss;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

In a possible implementation method, the PDU set loss rate is from a terminal device, and the PDU set loss rate includes one or more of the following:
a proportion of PDU sets that fail to be sent by the terminal device to an access network device;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

In a possible implementation method, the subscription request includes a PDU set delay event, and the PDU set delay event indicates that a monitored object is a PDU set delay; and that the processing unit 1110 is configured to control the transceiver unit 1120 to receive the monitoring result of the PDU set of the service flow specifically includes: being configured to control the transceiver unit 1120 to receive a PDU set delay of the service flow, or a sum of a PDU set delay and a CN PDB for an N3 segment.

In a possible implementation method, the monitoring result is from an access network device, and the PDU set delay includes one or more of the following:
time used by the access network device to successfully transmit the PDU set to a terminal device;
time used by the access network device to successfully transmit the PDU set to a terminal device within a PDU set delay budget; or
time used by the access network device to successfully transmit the PDU set to a terminal device exceeding a PDU set delay budget.

In a possible implementation method, the monitoring result is from a terminal device, and the PDU set delay includes one or more of the following:
time used by the terminal device to successfully transmit the PDU set to an access network device;
time used by the terminal device to successfully transmit the PDU set to an access network device within a PDU set delay budget; or
time used by the terminal device to successfully transmit the PDU set to an access network device exceeding a PDU set delay budget.

In a possible implementation method, the subscription request includes a PDU set spread delay event, and the PDU set spread delay event indicates that a monitored object is a PDU set spread delay; and that the processing unit 1110 is configured to control the transceiver unit 1120 to receive the monitoring result of the PDU set of the service flow specifically includes: being configured to control the transceiver unit 1120 to receive a PDU set spread delay of the service flow.

In a possible implementation method, the monitoring result is from a user plane network element, and the PDU set spread delay includes one or more of the following:
a time interval between arrival of a 1^{st} packet in the PDU set at the user plane network element and arrival of a last packet in the PDU set at the user plane network element;
a time interval between arrival of a 1^{st} packet in the PDU set at the user plane network element and departure of a last packet in the PDU set from the user plane network element;
a time interval between departure of a 1^{st} packet in the PDU set from the user plane network element and departure of a last packet in the PDU set from the user plane network element; or
a proportion of target PDU sets, where a time interval between arrival of a 1^{st} packet in the target PDU set at the user plane network element and arrival of a last packet in the target PDU set at the user plane network element does not exceed a preset threshold.

In a possible implementation method, the subscription request includes a PDU set QoS handling enabled status event, and the PDU set QoS handling enabled status event indicates that a monitored object is a PDU set QoS handling enabled status; and that the processing unit 1110 is configured to control the transceiver unit 1120 to receive the monitoring result of the PDU set of the service flow specifically includes: being configured to control the transceiver unit 1120 to receive a PDU set QoS handling enabled status of the service flow.

In a possible implementation method, the subscription request includes a reporting indication, and the reporting indication indicates to report the monitoring result of the PDU set to a second network element; and that the processing unit 1110 is configured to control the transceiver unit 1120 to receive the monitoring result of the PDU set of the service flow specifically includes: being configured to control the transceiver unit 1120 to receive the monitoring result from the second network element.

For more detailed descriptions of the processing unit 1110 and the transceiver unit 1120, directly refer to related descriptions in the foregoing method embodiments. Details are not described herein.

A communication apparatus 1200 shown in FIG. 12 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, store input data needed by the processor 1210 to run instructions, or store data generated after the processor 1210 runs instructions.

When the communication apparatus 1200 is configured to implement the foregoing method embodiments, the processor 1210 is configured to implement functions of the processing unit 1110, and the interface circuit 1220 is configured to implement functions of the transceiver unit 1120.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

A person of ordinary skill in the art may understand that various numbers such as first and second in this application are merely used for differentiation for ease of description, and are not used to limit the scope of embodiments of this application or represent a sequence. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one" or a similar expression thereof means any combination of the items, including any combination of one item (piece) or a plurality of items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined based on functions and internal logic of the processes, and should not constitute any limitation on implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with one digital signal processor core, or any other similar configuration.

Steps of the methods or algorithms described in embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable magnetic disk, a CD-ROM, or a storage medium in any other form in the art. For example, the storage medium may be connected to the processor, so that the processor can read information from the storage medium and write information into the storage medium. Optionally, the storage medium may alternatively be integrated into the processor. The processor and the storage medium may be disposed in an ASIC.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a function specified in one or more procedures in the flowcharts and/or in one or more blocks in the block diagrams.

In one or more example designs, the functions described in this application may be implemented by using hardware, software, firmware, or any combination thereof. If the functions are implemented by using the software, these functions may be stored in a computer-readable medium or transmitted to the computer-readable medium in a form of one or more instructions or code. The computer-readable medium includes a computer storage medium and a communication medium that enables a computer program to move from one place to another. The storage medium may be an available medium that may be accessed by any general-purpose or special computer. For example, such a computer-readable medium may include but is not limited to a RAM, a ROM, an EEPROM, a CD-ROM, another optical disc storage, a disk storage, another magnetic storage apparatus, or any other medium that may be used to bear or store program code, where the program code is in a form of an instruction or a data structure or in a form that can be read by a general-purpose or special computer or a general-purpose or special processor. In addition, any connection may be appropriately defined as a computer-readable medium. For example, if software is transmitted from a website, a server, or another remote resource by using a coaxial cable, an optical fiber computer, a twisted pair, or a digital subscriber line (DSL), or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data in a magnetic manner, and the disk usually optically copies data in a laser manner. The foregoing combination may also be included in the computer-readable medium.

A person skilled in the art should be aware that in the foregoing one or more examples, the functions described in this application may be implemented by hardware, software, firmware, or any combination thereof. When the software is used to implement the functions, the functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any usable medium accessible to a general-purpose or dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application. According to the foregoing descriptions of this specification in this application, technologies in the art may use or implement the content of this application. Any modification based on the disclosed content shall be considered clear in the art. The basic principles described in this application may be applied to other variations without departing from the invention essence and scope of this application. Therefore, the content disclosed in this application is not limited to the described embodiments and designs but may also be extended to a maximum scope that is consistent with the principles and disclosed new features of this application.

Although this application is described with reference to specific features and embodiments thereof, it is clear that various modifications and combinations may be made to this application without departing from the spirit and scope of this application. Correspondingly, this specification and the accompanying drawings are merely example descriptions of this application defined by the appended claims, and are considered to have covered any of or all modifications, variations, combinations or equivalents within the scope of this application. It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A communication method, applied to a first network element or a chip of a first network element, wherein the method comprises:
receiving first information, wherein the first information is used to monitor a protocol data unit PDU set carried in a quality of service QoS flow and report a monitoring result of the PDU set;
monitoring, based on the first information, the PDU set carried in the QoS flow; and
sending the monitoring result of the PDU set to a second network element.

2. The method according to claim 1, wherein the first information comprises a PDU set loss rate event, and the PDU set loss rate event indicates that a monitored object is a PDU set loss rate; and
the monitoring, based on the first information, the PDU set carried in the QoS flow comprises:
monitoring a PDU set loss rate of the QoS flow based on the first information.

3. The method according to claim 2, wherein the first network element is an access network device, and the PDU set loss rate comprises one or more of the following:
a proportion of PDU sets that fail to be sent by the access network device to a terminal device;
a proportion of PDU sets discarded due to data packet loss;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

4. The method according to claim 2, wherein the first network element is a terminal device, and the PDU set loss rate comprises one or more of the following:
a proportion of PDU sets that fail to be sent by the terminal device to an access network device;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

5. The method according to claim 1, wherein the first information comprises a PDU set delay event, and the PDU set delay event indicates that a monitored object is a PDU set delay; and
the monitoring, based on the first information, the PDU set carried in the QoS flow comprises:
monitoring a PDU set delay of the QoS flow based on the first information.

6. The method according to claim 5, wherein the first network element is an access network device, and the PDU set delay comprises one or more of the following:
time used by the access network device to successfully transmit the PDU set to a terminal device;
time used by the access network device to successfully transmit the PDU set to a terminal device within a PDU set delay budget; or
time used by the access network device to successfully transmit the PDU set to a terminal device exceeding a PDU set delay budget.

7. The method according to claim 5, wherein the first network element is a terminal device, and the PDU set delay comprises one or more of the following:
time used by the terminal device to successfully transmit the PDU set to an access network device;
time used by the terminal device to successfully transmit the PDU set to an access network device within a PDU set delay budget; or
time used by the terminal device to successfully transmit the PDU set to an access network device exceeding a PDU set delay budget.

8. The method according to any one of claims 5 to 7, wherein the monitoring result comprises the PDU set delay, or comprises a sum of the PDU set delay and a core network packet delay budget CN PDB for an N3 segment.

9. The method according to claim 1, wherein the first network element is a user plane network element, the first information comprises a PDU set spread delay event, and the PDU set spread delay event indicates that a monitored object is a PDU set spread delay; and
the monitoring, based on the first information, the PDU set carried in the QoS flow comprises:
monitoring a PDU set spread delay of the QoS flow based on the first information.

10. The method according to claim 9, wherein the PDU set spread delay comprises one or more of the following:
a time interval between arrival of a 1^{st} packet in the PDU set at the user plane network element and arrival of a last packet in the PDU set at the user plane network element;
a time interval between arrival of a 1^{st} packet in the PDU set at the user plane network element and departure of a last packet in the PDU set from the user plane network element;
a time interval between departure of a 1^{st} packet in the PDU set from the user plane network element and departure of a last packet in the PDU set from the user plane network element; or
a proportion of target PDU sets, wherein a time interval between arrival of a 1^{st} packet in the target PDU set at the user plane network element and arrival of a last packet in the target PDU set at the user plane network element does not exceed a preset threshold.

11. The method according to claim 1, wherein the first network element is a session management network element, the first information comprises a PDU set QoS handling enabled status event, and the PDU set QoS handling enabled status event indicates that a monitored object is a PDU set QoS handling enabled status; and
the monitoring, based on the first information, the PDU set carried in the QoS flow comprises:
monitoring a PDU set QoS handling enabled status of the QoS flow based on the first information.

12. The method according to any one of claims 1 to 11, wherein the first information comprises a reporting indication, and the reporting indication indicates to report the monitoring result of the PDU set to the second network element; and
the sending the monitoring result of the PDU set to the second network element comprises:
sending the monitoring result to the second network element based on the reporting indication.

13. A communication method, comprising:
sending a subscription request, wherein the subscription request is used to subscribe to a monitoring result of a PDU set of a service flow; and
receiving the monitoring result of the PDU set of the service flow.

14. The method according to claim 13, wherein the subscription request comprises a PDU set loss rate event, and the PDU set loss rate event indicates that a monitored object is a PDU set loss rate; and
the receiving the monitoring result of the PDU set of the service flow comprises:
receiving a PDU set loss rate of the service flow.

15. The method according to claim 14, wherein the PDU set loss rate is from an access network device, and the PDU set loss rate comprises one or more of the following:
a proportion of PDU sets that fail to be sent by the access network device to a terminal device;
a proportion of PDU sets discarded due to data packet loss;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

16. The method according to claim 14, wherein the PDU set loss rate is from a terminal device, and the PDU set loss rate comprises one or more of the following:
a proportion of PDU sets that fail to be sent by the terminal device to an access network device;
a proportion of PDU sets discarded due to transmission failure;
a proportion of data packets that fail to be transmitted;
a total quantity of data packets that fail to be transmitted; or
a proportion of PDU sets discarded due to packet loss based on PDU set importance.

17. The method according to claim 13, wherein the subscription request comprises a PDU set delay event, and the PDU set delay event indicates that a monitored object is a PDU set delay; and
the receiving the monitoring result of the PDU set of the service flow comprises:
receiving a PDU set delay of the service flow, or a sum of a PDU set delay and a core network packet delay budget CN PDB for an N3 segment.

18. The method according to claim 17, wherein the monitoring result is from an access network device, and the PDU set delay comprises one or more of the following:
time used by the access network device to successfully transmit the PDU set to a terminal device;
time used by the access network device to successfully transmit the PDU set to a terminal device within a PDU set delay budget; or
time used by the access network device to successfully transmit the PDU set to a terminal device exceeding a PDU set delay budget.

19. The method according to claim 17, wherein the monitoring result is from a terminal device, and the PDU set delay comprises one or more of the following:
time used by the terminal device to successfully transmit the PDU set to an access network device;
time used by the terminal device to successfully transmit the PDU set to an access network device within a PDU set delay budget; or
time used by the terminal device to successfully transmit the PDU set to an access network device exceeding a PDU set delay budget.

20. The method according to claim 13, wherein the subscription request comprises a PDU set spread delay event, and the PDU set spread delay event indicates that a monitored object is a PDU set spread delay; and
the receiving the monitoring result of the PDU set of the service flow comprises:
receiving a PDU set spread delay of the service flow.

21. The method according to claim 20, wherein the monitoring result is from a user plane network element, and the PDU set spread delay comprises one or more of the following:
a time interval between arrival of a 1^{st} packet in the PDU set at the user plane network element and arrival of a last packet in the PDU set at the user plane network element;
a time interval between arrival of a 1^{st} packet in the PDU set at the user plane network element and departure of a last packet in the PDU set from the user plane network element;
a time interval between departure of a 1^{st} packet in the PDU set from the user plane network element and departure of a last packet in the PDU set from the user plane network element; or
a proportion of target PDU sets, wherein a time interval between arrival of a 1^{st} packet in the target PDU set at the user plane network element and arrival of a last packet in the target PDU set at the user plane network element does not exceed a preset threshold.

22. The method according to claim 13, wherein the subscription request comprises a PDU set QoS handling enabled status event, and the PDU set QoS handling enabled status event indicates that a monitored object is a PDU set QoS handling enabled status; and
the receiving the monitoring result of the PDU set of the service flow comprises:
receiving a PDU set QoS handling enabled status of the service flow.

23. The method according to any one of claims 13 to 22, wherein the subscription request comprises a reporting indication, and the reporting indication indicates to report the monitoring result of the PDU set to a second network element; and
the receiving the monitoring result of the PDU set of the service flow comprises:
receiving the monitoring result from the second network element.

24. A communication apparatus, comprising a module configured to perform the method according to any one of claims 1 to 12, or perform the method according to any one of claims 13 to 23.

25. A communication apparatus, comprising a processor and an interface circuit, wherein the processor is configured to communicate with another apparatus through the interface circuit, and perform the method according to any one of claims 1 to 12, or perform the method according to any one of claims 13 to 23.

26. A computer program product, wherein the computer program product comprises instructions, and when the instructions are run on a communication apparatus, the communication apparatus is caused to perform the method according to any one of claims 1 to 12, or perform the method according to any one of claims 13 to 23.

27. A computer-readable storage medium, wherein the storage medium stores a computer program or instructions, and when the computer program or the instructions are executed by a communication apparatus, the method according to any one of claims 1 to 12 is implemented, or the method according to any one of claims 13 to 23 is implemented.

28. A communication system, comprising:
a first network element, configured to: receive first information, wherein the first information is used to monitor a protocol data unit PDU set of a first quality of service QoS flow and report a monitoring result of the PDU set; monitor, based on the first information, the PDU set carried in the QoS flow; and send the monitoring result of the PDU set to a second network element; and
the second network element, configured to receive the monitoring result.

29. A communication system, comprising:
an application function network element, configured to: send a subscription request to a policy control network element, wherein the subscription request is used to subscribe to a monitoring result of a PDU set of a service flow; and receive the monitoring result of the PDU set of the service flow from the policy control network element; and
the policy control network element, configured to: receive the subscription request; and send the monitoring result to the application function network element.
